# EUROPEAN PATENT APPLICATION

(11) **EP 3 998 578 A1**
(43) Date of publication of application: **18.05.2022**
(21) Application number: 19937737.5
(22) Date of filing: 16.07.2019
(51) Int. Cl.: G06T 7/246

(54) **PHOTOGRAPHING METHOD, DEVICE AND SYSTEM, AND COMPUTER READABLE STORAGE MEDIUM**

(71) Applicant: SZ DJI Technology Co., Ltd., Shenzhen, Guangdong 518057 (CN)
(72) Inventor: XIE, Zhuo, Shenzhen, Guangdong 518057 (CN); PAN, Paul, Shenzhen, Guangdong 518057 (CN); XIAO, Ruijie, Shenzhen, Guangdong 518057 (CN)
(74) Representative: Goddar, Heinz J.
(86) International application number: PCT/CN2019/096246
(87) International publication number: WO 2021/007792

(57) **Abstract**

A photographing method, device, and system, and a computer-readable storage medium are provided. The method includes: displaying a time-lapse shot and tracking icon; obtaining a user's operation on the time-lapse shot and tracking icon, to generate a time-lapse shot instruction and a tracking instruction; determining a to-be-tracked target based on the user's operation on a picture displayed on a display interface; and controlling a mobile platform to adjust a gimbal attitude of the mobile platform based on the tracking instruction to track the to-be-tracked target, and performing time-lapse shot on the to-be-tracked target based on the time-lapse shot instruction, so as to implement time-lapse shot and tracking on the to-be-tracked target simultaneously. Therefore, time-lapse shot and target tracking can be implemented simultaneously, without requiring the user to manually adjust a shooting angle of a photographing apparatus. Further, a final effect of a shot picture can be improved, and photographing labor costs are reduced.

## Description

### TECHNICAL FIELD

The present invention relates to the field of photographing technologies, and in particular, to a photographing method, device, and system, and a computer-readable storage medium.

### BACKGROUND

To shoot a photo with a good effect, a user usually performs time-lapse shot on a photographed object, and controls to continuously photographing a specific object. In the conventional technologies, a user usually determines a to-be-tracked target manually while performing time-lapse shot automatically. For example, the user may manually select a to-be-tracked target with a box on an interface, and manually operate to perform intelligent tracking, to ensure that the object to be continuously photographed is always in a picture captured by a photographing apparatus, or the user may manually perform time-lapse shot while using intelligent tracking.

However, due to the impact of manual control accuracy, a picture that is shot in a manual control mode has a poor effect. In addition, since the user needs to spend a lot of effort to operate the manual control mode, the photographing costs are high.

### SUMMARY

The present invention provides a photographing method, device, and system, and a computer-readable storage medium to resolve problems of high photographing costs and poor effects.

To resolve the foregoing technical problems, the present invention is implemented as follows:
According to a first aspect, some embodiments of the present invention provide a photographing method the method is applied to a control terminal, the control terminal is used for communicating to a mobile platform, a time-lapse shot and tracking icon is provided on a display interface of the control terminal, the method includes:
displaying the time-lapse shot and tracking icon, where the time-lapse shot and tracking icon is used for indicating a time-lapse shot instruction and a tracking instruction, the time-lapse shot instruction is used for controlling the control terminal to perform time-lapse shot, and the tracking instruction is used for controlling the mobile platform to track a to-be-tracked target;
obtaining an operation of a user to the time-lapse shot and tracking icon, to generate the time-lapse shot instruction and the tracking instruction;
obtaining an operation of the user on a picture displayed on the display interface, and determining the to-be-tracked target based on the operation of the user on the picture displayed on the display interface, where the picture includes a picture obtained by the control terminal; and
controlling the mobile platform to adjust a gimbal attitude of the mobile platform based on the tracking instruction to track the to-be-tracked target, so that the to-be-tracked target is continuously displayed on the display interface, and performing time-lapse shot on the to-be-tracked target based on the time-lapse shot instruction, to implement time-lapse shot and tracking on the to-be-tracked target simultaneously.

According to a second aspect, some embodiments of the present invention provide a photographing method, the method is applied to a mobile platform, the mobile platform is communicated with a control terminal, the method includes:
obtaining a tracking instruction sent by the control terminal; and
while the control terminal performs time-lapse shot on a to-be-tracked target based on a time-lapse shot instruction, adjusting a gimbal attitude of the mobile platform based on the tracking instruction, so that the to-be-tracked target is continuously displayed in a picture displayed on a display interface of the control terminal.

According to a third aspect, some embodiments of the present invention provide a photographing method, the method is applied to a system including a mobile platform and a control terminal, where the control terminal is communicated with the mobile platform, a time-lapse shot and tracking icon is provided on a display interface of the control terminal, and the method includes:
displaying, by the control terminal, the time-lapse shot and tracking icon;
obtaining, by the control terminal, an operation of a user to the time-lapse shot and tracking icon, to generate the time-lapse photographing instruction and the tracking instruction;
obtaining, by the control terminal, an operation of the user on a picture displayed on the display interface, and determining the to-be-tracked target based on the user's operation on the picture displayed on the display interface, where the picture includes a picture obtained by the control terminal;
controlling, by the control terminal, the mobile platform to adjust a gimbal attitude of the mobile platform based on the tracking instruction, and performing time-lapse shot on the to-be-tracked target based on the time-lapse shot instruction;
obtaining, by the mobile platform, the tracking instruction sent by the control terminal; and
while the control terminal performs time-lapse shot on the to-be-tracked target based on the time-lapse shot instruction, adjusting, by the mobile platform, the gimbal attitude of the mobile platform based on the tracking instruction, so that the to-be-tracked target is continuously displayed in the picture displayed on the display interface of the control terminal.

According to a fourth aspect, some embodiments of the present invention provide a photographing method, the method is applied to a mobile platform, the mobile platform is communicated with a control terminal and configured to mount the control terminal, a time-lapse tracking and photographing key is provided on the mobile platform, and the method includes:
obtaining an operation of a user to the time-lapse tracking and photographing key, to generate a time-lapse tracking and photographing trigger instruction;
sending the time-lapse tracking and photographing trigger instruction to the control terminal, so that the control terminal generates a time-lapse shot instruction and a tracking instruction;
obtaining the tracking instruction sent by the control terminal; and
while the control terminal performs time-lapse shot on a to-be-tracked target based on the time-lapse shot instruction, adjusting a gimbal attitude of the mobile platform based on the tracking instruction, so that the to-be-tracked target is continuously displayed in a picture displayed on a display interface of the control terminal.

According to a fifth aspect, some embodiments of the present invention provide a photographing method, the method is applied to a control terminal, the control terminal is communicated with a mobile platform, the control terminal is further configured to be mounted on the mobile platform, and the method includes:
obtaining a time-lapse tracking and photographing trigger instruction sent by the mobile platform;
generating a time-lapse shot instruction and a tracking instruction;
obtaining an operation of a user on a picture displayed on a display interface, and determining the to-be-tracked target based on the operation of the user on the picture displayed on the display interface, where the picture includes a picture obtained by the control terminal; and
performing time-lapse shot on the to-be-tracked target based on the time-lapse shot instruction, and controlling the mobile platform to adjust a gimbal attitude of the mobile platform based on the tracking instruction to track the to-be-tracked target, so that the to-be-tracked target is continuously displayed on the display interface, so as to implement time-lapse shot and tracking on the to-be-tracked target simultaneously.

According to a sixth aspect, some embodiments of the present invention provide a photographing method, the method is applied to a system including a mobile platform and a control terminal, the mobile platform is communicated with the control terminal and configured to mount the control terminal, a time-lapse tracking and photographing key is provided in the mobile platform, and the method includes:
obtaining, by the mobile platform, an operation of a user to the time-lapse tracking and photographing key, to generate a time-lapse tracking and photographing trigger instruction;
sending, by the mobile platform, the time-lapse shot trigger instruction to the control terminal;
obtaining, by the control terminal, the time-lapse shot trigger instruction sent by the mobile platform;
generating, by the control terminal, a time-lapse shot instruction and a tracking instruction, where the time-lapse shot instruction is used for controlling the control terminal to perform time-lapse shot, and the tracking instruction is used for controlling the mobile platform to track a to-be-tracked target;
obtaining, by the control terminal, an operation of the user on a picture displayed on a display interface, and determining the to-be-tracked target based on the operation of the user on the picture displayed on the display interface, where the picture includes a picture obtained by the control terminal;
performing, by the control terminal, time-lapse shot on the to-be-tracked target based on the time-lapse shot instruction, and controlling the mobile platform to adjust a gimbal attitude of the mobile platform based on the tracking instruction;
obtaining, by the mobile platform, the tracking instruction sent by the control terminal; and
while the control terminal performs time-lapse shot on the to-be-tracked target based on the time-lapse shot instruction, adjusting, by the mobile platform, the gimbal attitude of the mobile platform based on the tracking instruction, so that the to-be-tracked target is continuously displayed in the picture displayed on the display interface of the control terminal.

According to a seventh aspect, some embodiments of the present invention provide a photographing method, the method is applied to a mobile platform, the mobile platform is provided with a display interface and further provided with a photographing apparatus, the mobile platform is communicated with the photographing apparatus, and the method includes:
obtaining an operation of a user on a time-lapse shot and tracking icon on the display interface, to generate a time-lapse shot instruction and a tracking instruction, where the time-lapse shot instruction is used for controlling the photographing apparatus to perform time-lapse shot, and the tracking instruction is used for controlling the mobile platform to track a to-be-tracked target for photographing;
obtaining the operation of the user on a picture displayed on the display interface, and determining the to-be-tracked target based on the operation of the user on the picture displayed on the display interface; and
controlling the photographing apparatus based on the time-lapse shot instruction to perform time-lapse shot on the to-be-tracked target, and adjusting a gimbal attitude of the mobile platform based on the tracking instruction, so that the to-be-tracked target is continuously displayed in the picture displayed on the display interface, so as to implement time-lapse shot and tracking on the to-be-tracked target simultaneously.

According to an eighth aspect, some embodiments of the present invention provide a photographing method, the method is applied to a control terminal, where the method includes:
obtaining a time-lapse shot parameter and a target tracking parameter, and determining a to-be-tracked target; and
photographing the to-be-tracked target based on the time-lapse shot parameter; and sending a control instruction to a mobile platform based on the target tracking parameter and the to-be-tracked target, to control the mobile platform to adjust a gimbal attitude of the mobile platform based on the tracking instruction, so that the to-be-tracked target is continuously displayed in a picture displayed on a display interface of the control terminal, so as to implement time-lapse shot and tracking on the to-be-tracked target simultaneously.

According to a ninth aspect, some embodiments of the present invention provide a photographing method, the method is applied to a mobile platform, the method includes:
while a control terminal photographs a to-be-tracked target based on a time-lapse shot parameter, obtaining a control instruction sent by the control terminal, where the control instruction is sent by the control terminal based on a target tracking parameter and the to-be-tracked target; and
adjusting a gimbal attitude of the mobile platform based on the control instruction, so that the to-be-tracked target is continuously displayed in a picture displayed on a display interface of the control terminal, so as to implement time-lapse shot and tracking on the to-be-tracked target simultaneously.

According to a tenth aspect, some embodiments of the present invention provide a photographing method, the method is applied to a system including a mobile platform and a control terminal, the control terminal is communicated with the mobile platform, and the method includes:
obtaining, by the control terminal, a time-lapse shot parameter and a target tracking parameter, and determining a to-be-tracked target;
photographing, by the control terminal, the to-be-tracked target based on the time-lapse shot parameter, and sending a control instruction to the mobile platform based on the target tracking parameter and the to-be-tracked target;
obtaining, by the mobile platform, the control instruction sent by the control terminal; and
while the control terminal photographs the to-be-tracked target based on the time-lapse shot parameter, adjusting, by the mobile platform, a gimbal attitude of the mobile platform based on the control instruction, so that the to-be-tracked target is continuously displayed in a picture displayed on a display interface of the control terminal, so as to implement time-lapse shot and tracking on the to-be-tracked target simultaneously.

According to an eleventh aspect, some embodiments of the present invention provide a photographing device, the device is applied to a control terminal, the control terminal is communicated with a mobile platform, a time-lapse shot and tracking icon is provided on a display interface of the control terminal, and the device includes:
a display device, configured to display the time-lapse shot and tracking icon, where the time-lapse shot and tracking icon is used to indicate a time-lapse shot instruction and a tracking instruction, the time-lapse shot instruction is used to control the control terminal to perform time-lapse shot, and the tracking instruction is used to control the mobile platform to track a to-be-tracked target;
a first obtaining device, configured to obtain an operation of a user to the time-lapse shot and tracking icon, to generate the time-lapse shot instruction and the tracking instruction;
a second obtaining device, configured to obtain an operation of the user on a picture displayed on the display interface, and determine the to-be-tracked target based on the operation of the user on the picture displayed on the display interface, where the picture includes a picture obtained by the control terminal; and
a control device, configured to control the mobile platform to adjust a gimbal attitude of the mobile platform based on the tracking instruction to track the to-be-tracked target, so that the to-be-tracked target is continuously displayed on the display interface, and perform time-lapse shot on the to-be-tracked target based on the time-lapse shot instruction, to implement time-lapse shot and tracking on the to-be-tracked target simultaneously.

According to a twelfth aspect, some embodiments of the present invention provide a photographing device, the device is applied to a mobile platform, the mobile platform is communicated with a control terminal, and the device includes:
a first obtaining device, configured to obtain a tracking instruction sent by the control terminal; and
an adjustment device, configured to: while the control terminal performs time-lapse shot on a to-be-tracked target based on a time-lapse shot instruction, adjust a gimbal attitude of the mobile platform based on the tracking instruction, so that the to-be-tracked target is continuously displayed in a picture displayed on a display interface of the control terminal.

According to a thirteenth aspect, some embodiments of the present invention provide a photographing system including a mobile platform and a control terminal, where the control terminal is communicated with the mobile platform, and a time-lapse shot and tracking icon is provided on a display interface of the control terminal;
the control terminal is configured to display the time-lapse shot and tracking icon;
the control terminal is configured to obtain an operation of a user to the time-lapse shot and tracking icon, to generate the time-lapse shot instruction and the tracking instruction;
the control terminal is configured to obtain an operation of the user on a picture displayed on the display interface, and determine the to-be-tracked target based on the operation of the user on the picture displayed on the display interface, where the picture includes a picture obtained by the control terminal;
the control terminal is configured to control the mobile platform to adjust a gimbal attitude of the mobile platform based on the tracking instruction, and perform time-lapse shot on the to-be-tracked target based on the time-lapse shot instruction;
the mobile platform is configured to obtain the tracking instruction sent by the control terminal; and
the mobile platform is configured to: while the control terminal performs time-lapse shot on the to-be-tracked target based on the time-lapse shot instruction, adjust the gimbal attitude of the mobile platform based on the tracking instruction, so that the to-be-tracked target is continuously displayed in the picture displayed on the display interface of the control terminal.

According to a fourteenth aspect, some embodiments of the present invention provide a photographing device, the device is applied to a mobile platform, where the mobile platform is communicated with a control terminal and configured to mount the control terminal, a time-lapse tracking and photographing key is provided in the mobile platform, and the device includes:
a first obtaining device, configured to obtain an operation of a user to the time-lapse tracking and photographing key, to generate a time-lapse tracking and photographing trigger instruction;
a sending apparatus, configured to send the time-lapse tracking and photographing trigger instruction to the control terminal, so that the control terminal generates a time-lapse shot instruction and a tracking instruction;
a second obtaining device, configured to obtain the tracking instruction sent by the control terminal; and
an adjustment device, configured to: while the control terminal performs time-lapse shot on a to-be-tracked target based on the time-lapse shot instruction, adjust a gimbal attitude of the mobile platform based on the tracking instruction, so that the to-be-tracked target is continuously displayed in a picture displayed on a display interface of the control terminal.

According to a fifteenth aspect, some embodiments of the present invention provide a photographing device, the device is applied to a control terminal, characterized in that the control terminal is communicated with a mobile platform, the control terminal is further mounted on the mobile platform, and the device includes:
a first obtaining device, configured to obtain a time-lapse tracking and photographing trigger instruction sent by the mobile platform;
a generating apparatus, configured to generate a time-lapse shot instruction and a tracking instruction;
a second obtaining device, configured to obtain an operation of a user on a picture displayed on a display interface, and determine the to-be-tracked target based on the operation of the user on the picture displayed on the display interface, where the picture includes a picture obtained by the control terminal; and
a control device, configured to perform time-lapse shot on the to-be-tracked target based on the time-lapse shot instruction, and control the mobile platform to adjust a gimbal attitude of the mobile platform based on the tracking instruction to track the to-be-tracked target, so that the to-be-tracked target is continuously displayed on the display interface, so as to implement time-lapse shot and tracking on the to-be-tracked target simultaneously.

According to a sixteenth aspect, some embodiments of the present invention provide a photographing system including a mobile platform and a control terminal, the mobile platform is communicated with the control terminal and configured to mount the control terminal, and a time-lapse tracking and photographing key is provided in the mobile platform;
the mobile platform is configured to obtain an operation of a user to the time-lapse tracking and photographing key, to generate a time-lapse tracking and photographing trigger instruction;
the mobile platform is configured to send the time-lapse shot trigger instruction to the control terminal;
the control terminal is configured to obtain the time-lapse shot trigger instruction sent by the mobile platform;
the control terminal is configured to generate a time-lapse shot instruction and a tracking instruction, where the time-lapse shot instruction is used to control the control terminal to perform time-lapse shot, and the tracking instruction is used to control the mobile platform to track a to-be-tracked target;
the control terminal is configured to obtain an operation of the user on a picture displayed on a display interface, and determine the to-be-tracked target based on the operation of the user on the picture displayed on the display interface, where the picture includes a picture obtained by the control terminal;
the control terminal is configured to perform time-lapse shot on the to-be-tracked target based on the time-lapse shot instruction, and control the mobile platform to adjust a gimbal attitude of the mobile platform based on the tracking instruction;
the mobile platform is configured to obtain the tracking instruction sent by the control terminal; and
the mobile platform is configured to: while the control terminal performs time-lapse shot on the to-be-tracked target based on the time-lapse shot instruction, adjust the gimbal attitude of the mobile platform based on the tracking instruction, so that the to-be-tracked target is continuously displayed in the picture displayed on the display interface of the control terminal.

According to a seventeenth aspect, some embodiments of the present invention provide a photographing device, the device is applied to a mobile platform, the mobile platform is provided with a display interface and further provided with a photographing apparatus, the mobile platform is communicated with the photographing apparatus, and the device includes:
a first obtaining device, configured to obtain an operation of a user to a time-lapse shot and tracking icon on the display interface, to generate a time-lapse shot instruction and a tracking instruction, where the time-lapse shot instruction is used to control the photographing apparatus to perform time-lapse shot, and the tracking instruction is used to control the mobile platform to track a to-be-tracked target for photographing;
a second obtaining device, configured to obtain the operation of the user on a picture displayed on the display interface, and determine the to-be-tracked target based on the operation of the user on the picture displayed on the display interface; and
an adjustment device, configured to control the photographing apparatus based on the time-lapse shot instruction to perform time-lapse shot on the to-be-tracked target, and adjust a gimbal attitude of the mobile platform based on the tracking instruction, so that the to-be-tracked target is continuously displayed in the picture displayed on the display interface, to implement time-lapse shot and tracking on the to-be-tracked target simultaneously.

According to an eighteenth aspect, some embodiments of the present invention provide a photographing device, the device is applied to a control terminal, the device includes:
an obtaining apparatus, configured to obtain a time-lapse shot parameter and a target tracking parameter, and determine a to-be-tracked target; and
a tracking and photographing apparatus, configured to photograph the to-be-tracked target based on the time-lapse shot parameter; and send a control instruction to a mobile platform based on the target tracking parameter and the to-be-tracked target, to control the mobile platform to adjust a gimbal attitude of the mobile platform based on the tracking instruction, so that the to-be-tracked target is continuously displayed in a picture displayed on a display interface of the control terminal, so as to implement time-lapse shot and tracking on the to-be-tracked target simultaneously.

According to a nineteenth aspect, some embodiments of the present invention provide a photographing device, the device is applied to a mobile platform, the device includes:
an obtaining apparatus, configured to: while a control terminal photographs a to-be-tracked target based on a time-lapse shot parameter, obtain a control instruction sent by the control terminal, where the control instruction is sent by the control terminal based on a target tracking parameter and the to-be-tracked target; and
an adjustment device, configured to adjust a gimbal attitude of the mobile platform based on the control instruction, so that the to-be-tracked target is continuously displayed in a picture displayed on a display interface of the control terminal, so as to implement time-lapse shot and tracking on the to-be-tracked target simultaneously.

According to a twentieth aspect, some embodiments of the present invention provide a photographing system including a mobile platform and a control terminal, the control terminal is communicated with the mobile platform;
the control terminal is configured to obtain a time-lapse shot parameter and a target tracking parameter, and determine a to-be-tracked target;
the control terminal is configured to photograph the to-be-tracked target based on the time-lapse shot parameter, and send a control instruction to the mobile platform based on the target tracking parameter and the to-be-tracked target;
the mobile platform is configured to obtain the control instruction sent by the control terminal; and
the mobile platform is configured to: while the control terminal photographs the to-be-tracked target based on the time-lapse shot parameter, adjust a gimbal attitude of the mobile platform based on the control instruction, so that the to-be-tracked target is continuously displayed in a picture displayed on a display interface of the control terminal, so as to implement time-lapse shot and tracking on the to-be-tracked target simultaneously.

In the embodiments of the present invention, the control terminal displays the time-lapse shot and tracking icon; then obtains the user's operation on the time-lapse shot and tracking icon, to generate the time-lapse shot instruction and the tracking instruction; then determines the to-be-tracked target based on the user's operation on the picture displayed on the display interface; and finally controls the mobile platform to adjust the gimbal attitude of the mobile platform based on the tracking instruction to track the to-be-tracked target, and performs time-lapse shot on the to-be-tracked target based on the time-lapse shot instruction, to implement time-lapse shot and tracking on the to-be-tracked target simultaneously. Therefore, time-lapse shot and target tracking can be implemented simultaneously, without requiring the user to manually perform control. Further, a final effect of a shot picture can be improved, and photographing labor costs are reduced.

### BRIEF DESCRIPTION OF THE DRAWINGS

To clearly describe the technical solutions in the embodiments of the present invention or in the existing technologies, the following briefly describes the accompanying drawings required for describing the embodiments or the existing technologies. Apparently, the accompanying drawings in the following description show some embodiments of the present invention, and persons of ordinary skill in the art may still derive other drawings from these accompanying drawings without creative efforts.
FIG. 1 is a flowchart of steps of a photographing method according to an embodiment of the present invention;
FIG. 2 is a flowchart of steps of another photographing method according to an embodiment of the present invention;
FIG. 3-1 is a flowchart of steps of still another photographing method according to an embodiment of the present invention;
FIG. 3-2 is a schematic diagram of a parameter input interface according to an embodiment of the present invention;
FIG. 3-3 is a schematic diagram of a parameter selection interface according to an embodiment of the present invention;

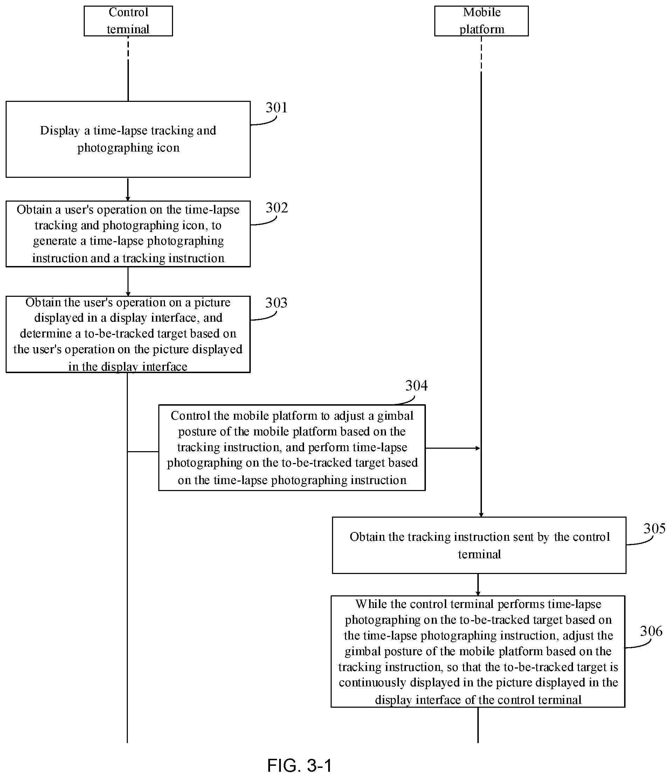

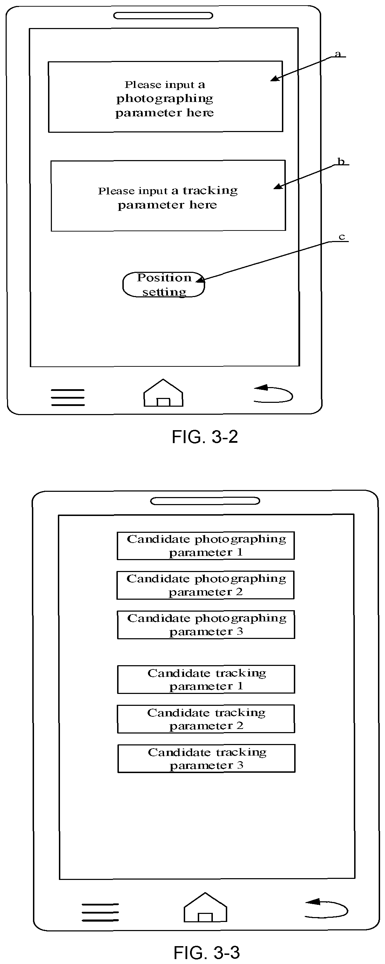

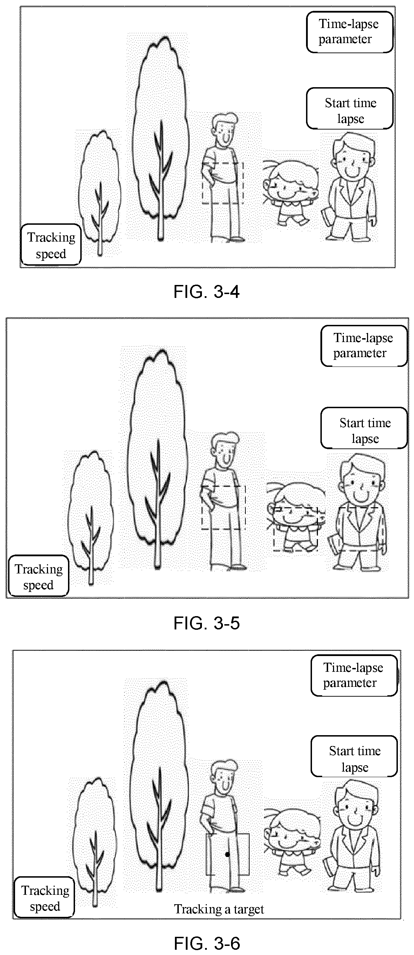

FIG. 3-4 is a schematic diagram of a selection box according to an embodiment of the present invention;
FIG. 3-5 is a schematic diagram of another selection box according to an embodiment of the present invention;
FIG. 3-6 is a schematic diagram of an interface in a tracking state;

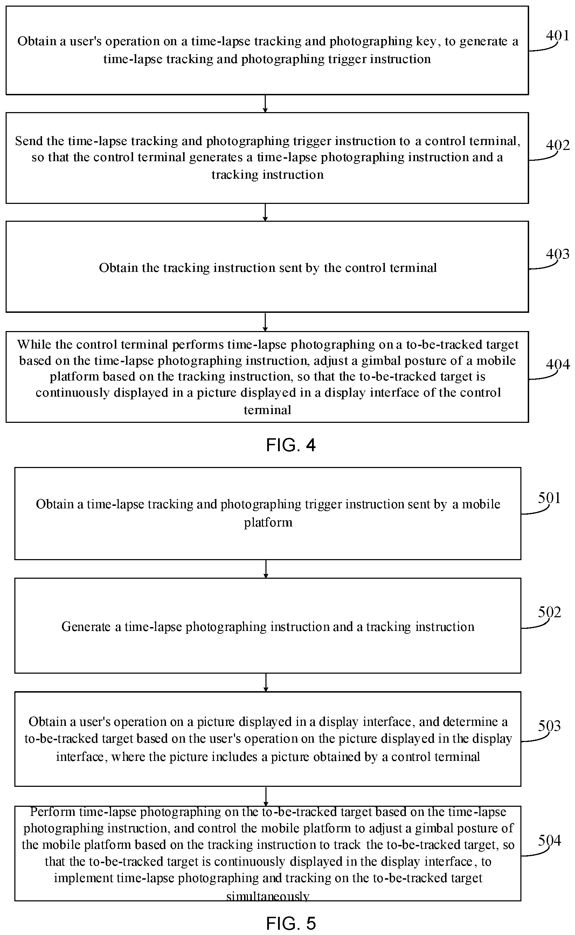

FIG. 4 is a flowchart of steps of yet another photographing method according to an embodiment of the present invention;
FIG. 5 is a flowchart of steps of yet another photographing method according to an embodiment of the present invention;

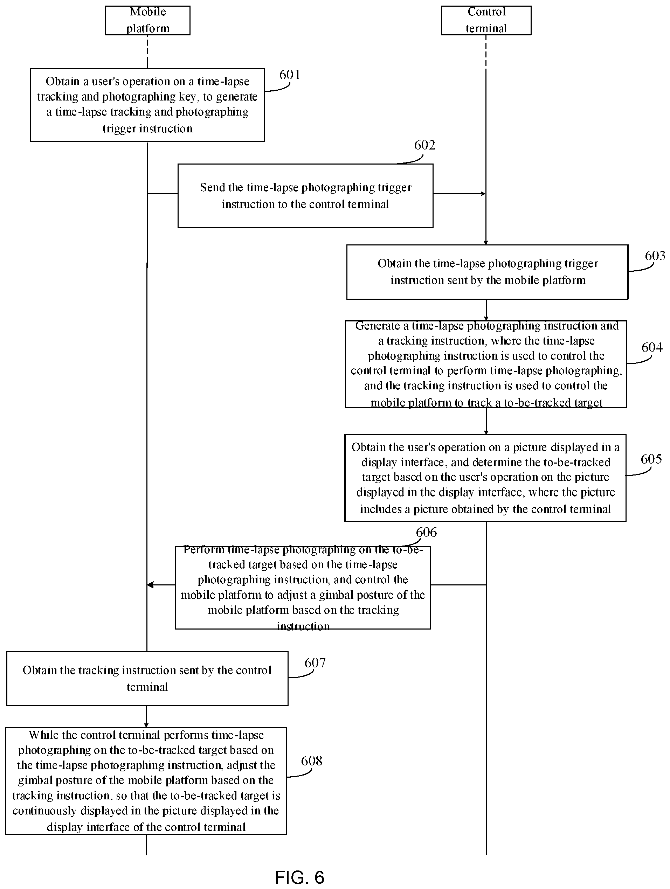

FIG. 6 is a flowchart of steps of yet another photographing method according to an embodiment of the present invention;

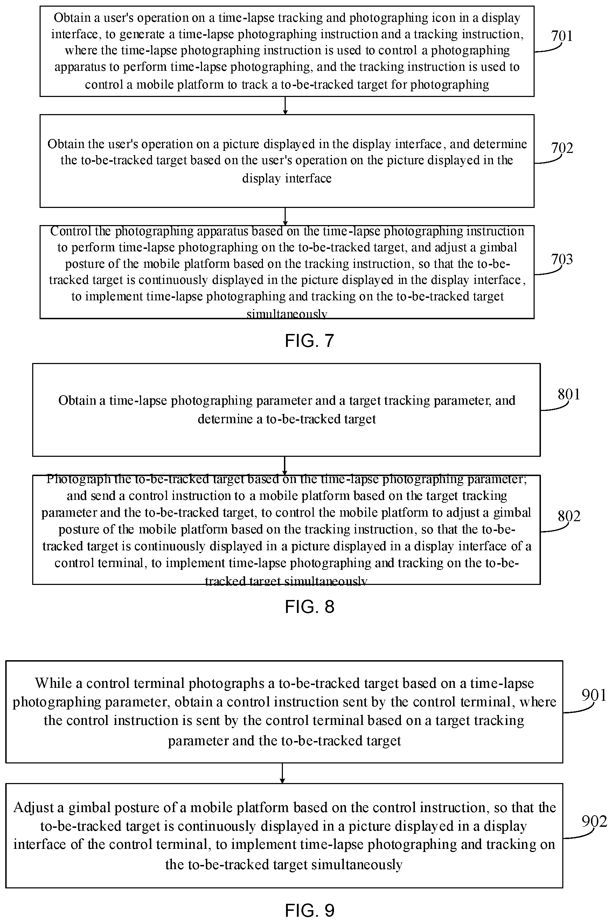

FIG. 7 is a flowchart of steps of yet another photographing method according to an embodiment of the present invention;
FIG. 8 is a flowchart of steps of yet another photographing method according to an embodiment of the present invention;
FIG. 9 is a flowchart of steps of yet another photographing method according to an embodiment of the present invention;

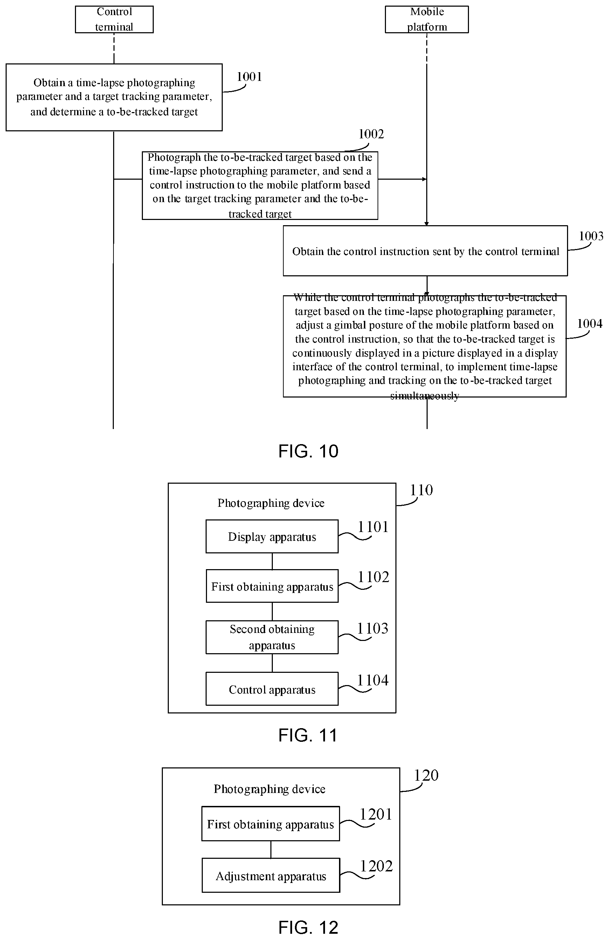

FIG. 10 is a flowchart of steps of yet another photographing method according to an embodiment of the present invention;
FIG. 11 is a block diagram of a photographing device according to an embodiment of the present invention;
FIG. 12 is a block diagram of another photographing device according to an embodiment of the present invention;

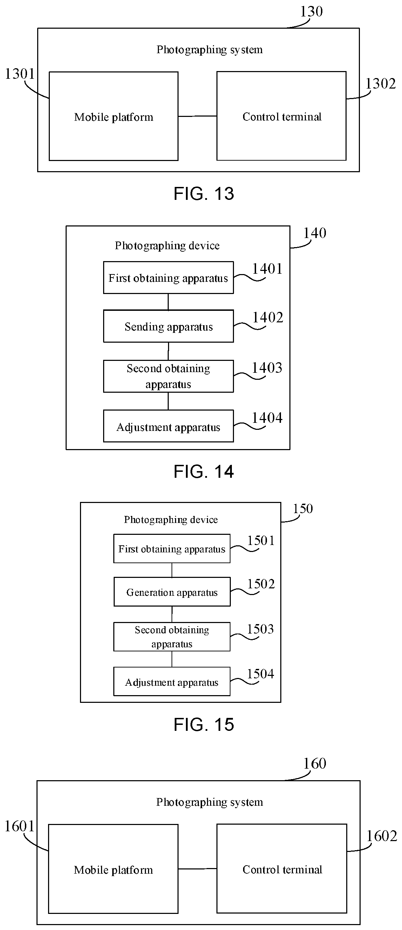

FIG. 13 is a block diagram of a photographing system according to an embodiment of the present invention;
FIG. 14 is a block diagram of still another photographing device according to an embodiment of the present invention;
FIG. 15 is a block diagram of yet another photographing device according to an embodiment of the present invention;
FIG. 16 is a block diagram of another photographing system according to an embodiment of the present invention;

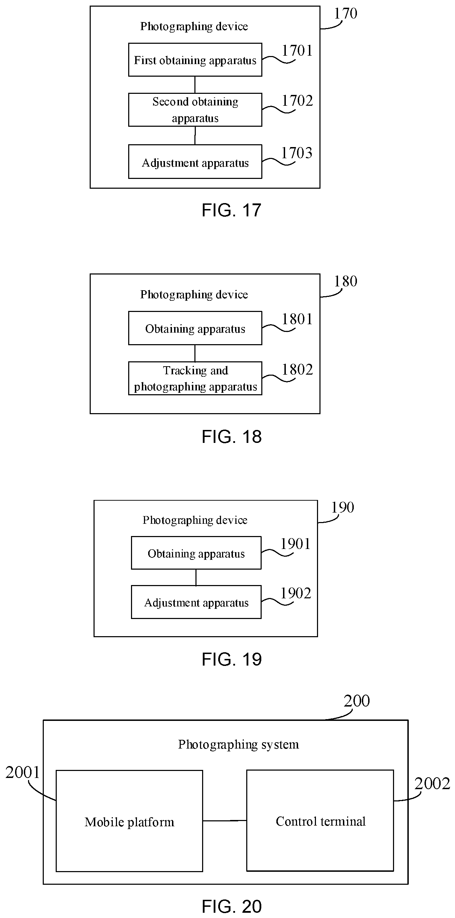

FIG. 17 is a block diagram of yet another photographing device according to an embodiment of the present invention;
FIG. 18 is a block diagram of yet another photographing device according to an embodiment of the present invention;
FIG. 19 is a block diagram of yet another photographing device according to an embodiment of the present invention;
FIG. 20 is a block diagram of still another photographing system according to an embodiment of the present invention; and

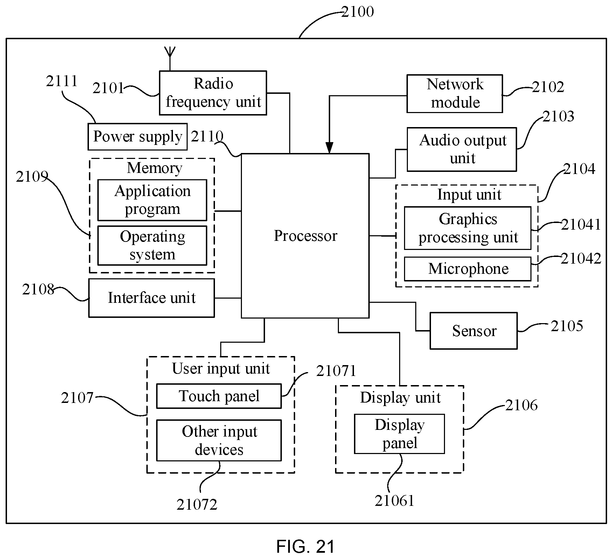

FIG. 21 is a schematic diagram of a hardware structure of a control terminal for implementing each embodiment of the present invention.

### DETAILED DESCRIPTION

The following clearly and fully describes the technical solutions in the embodiments of the present invention with reference to the accompanying drawings of the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

An embodiment of the present invention provides a photographing method. The photographing method may be applied to a control terminal, a mobile platform, and a photographing apparatus. The photographing apparatus may be a part of a photographing terminal, that is, the photographing apparatus and the control terminal are integrated. Further, the photographing apparatus and the control terminal may be two independent devices; and correspondingly, the control terminal may be communicated with the photographing apparatus, to control the photographing apparatus.

In an application environment, the photographing apparatus may be fixed on a mobile platform, and the mobile platform may change a photographing angle of the photographing apparatus by adjusting a gimbal attitude. Further, the control terminal may control the photographing apparatus to photograph a to-be-tracked target, and control the mobile platform to perform a posture adjustment, to track the to-be-tracked target. In this way, photographing and tracking can be performed simultaneously, without requiring a user to perform a manual adjustment.

The following describes in detail the foregoing photographing method.

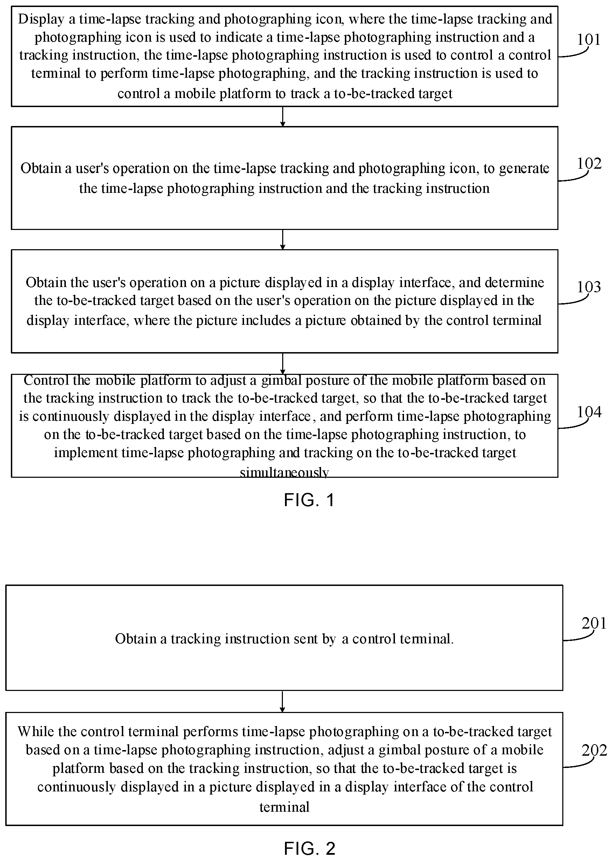

FIG. 1 is a flowchart of steps of a photographing method according to an embodiment of the present invention. The method may be applied to a control terminal, where the control terminal may be connected to a mobile platform. A time-lapse shot and tracking icon may be provided on a display interface of the control terminal. Specifically, as shown in FIG. 1, the method may include the following steps.

Step 101: Display the time-lapse shot and tracking icon, where the time-lapse shot and tracking icon is used to indicate a time-lapse shot instruction and a tracking instruction, the time-lapse shot instruction is used to control the control terminal to perform time-lapse shot, and the tracking instruction is used to control the mobile platform to track a to-be-tracked target.

In this embodiment of the present invention, the time-lapse shot and tracking icon may be arranged on any interface displayed by the display interface. For example, the time-lapse shot and tracking icon may be arranged on a main interface of the control terminal, or may be arranged on an interface of a preset application program installed on the control terminal. Further, a specific form of the time-lapse shot and tracking icon may be set as needed. For example, the time-lapse shot and tracking icon may be set as a round button or a square button, marked with the text "time-lapse tracking". This is not limited in embodiments of the present invention.

Further, the control terminal may be a mobile phone, a tablet computer, a portable computing device, or the like. The mobile device may be a device that can be mounted with an apparatus having a photographing function, for example, an unmanned vehicle, an unmanned ship, or a gimbal. The to-be-tracked target may be an object that is selected from a photographing scene and needs to be continuously photographed. In this embodiment of the present invention, the time-lapse shot and tracking icon is displayed, so that a user may conveniently trigger a time-lapse shot operation and a tracking operation simultaneously by using the time-lapse shot and tracking icon.

Step 102: Obtain a user's operation on the time-lapse shot and tracking icon, to generate the time-lapse shot instruction and the tracking instruction.

Since the process of time-lapse shot and target tracking typically needs to be performed based on a parameter(s), the user's operation on the time-lapse shot and tracking icon may be an operation of setting a corresponding parameter. Correspondingly, the control terminal may determine different parameters based on specific operations received, so as to further generate a corresponding instruction(s).

Step 103: Obtain the user's operation on a picture displayed on the display interface, and determine the to-be-tracked target based on the user's operation on the picture displayed on the display interface, where the picture includes a picture obtained by the control terminal.

In this embodiment of the present invention, a photographing apparatus for performing photographing may be provided on the control terminal. For example, the photographing apparatus may be a component of the control terminal, that is, the control terminal includes the photographing apparatus. Correspondingly, the control terminal may be mounted on the mobile platform, so that the mobile platform can adjust a photographing angle of the photographing apparatus, and that the control terminal can control the photographing apparatus based on internal instruction processing logic to perform photographing. Further, corresponding to this case, the picture obtained by the control terminal may be directly captured by the control terminal by using the photographing apparatus.

Further, the photographing apparatus and the control terminal may be two independent devices. Correspondingly, the photographing apparatus may be mounted on the mobile platform, so that the mobile platform can adjust a photographing angle of the photographing apparatus. In addition, the control terminal may be communicated with the photographing apparatus, so that the control terminal can control the photographing apparatus through the communication connection between the control terminal and the photographing apparatus, so as to perform photographing. Further, corresponding to this case, the picture obtained by the control terminal may be sent by the photographing apparatus to the control terminal through the communication connection between the control terminal and the photographing apparatus.

Further, an object contained in the current photographing scene is usually displayed in the picture. Therefore, the control terminal may determine the to-be-tracked target based on the user's operation on the picture. The user's operation on the picture may be an operation of selecting an object in the picture. A specific operation form of the selection operation may be set as needed, and is not limited in this embodiment of the present invention. In this embodiment of the present invention, since the picture displayed by the control terminal can visually present the object contained in the current photographing scene, the manner of determining the to-be-tracked target based on the user's operation on the picture can enable the user to select the to-be-tracked target visually and conveniently based on the picture, and further, operation difficulty of the user can be reduced to some extent.

Step 104: Control the mobile platform to adjust a gimbal attitude of the mobile platform based on the tracking instruction to track the to-be-tracked target, so that the to-be-tracked target is continuously displayed on the display interface, and perform time-lapse shot on the to-be-tracked target based on the time-lapse shot instruction, to implement time-lapse shot and tracking on the to-be-tracked target simultaneously.

In this embodiment of the present invention, the control terminal may send the tracking instruction to the mobile platform based on the communication between the control terminal and the mobile platform, to further adjust the gimbal attitude of the mobile platform based on the tracking instruction. Therefore, as the gimbal attitude of the mobile platform changes, the shooting angle of the photographing apparatus also changes correspondingly, and further, the to-be-tracked target can be tracked. Further, while the to-be-tracked target is tracked, the control terminal further performs time-lapse shot on the to-be-tracked target based on the time-lapse shot instruction, so that time-lapse shot and tracking can be implemented on the to-be-tracked target simultaneously.

As described above, in the photographing processing method provided by this embodiment of the present invention, the time-lapse shot and tracking icon is displayed; then the user's operation on the time-lapse shot and tracking icon is obtained to generate the time-lapse shot instruction and the tracking instruction; then the to-be-tracked target is determined based on the user's operation on the picture displayed on the display interface; and finally, the mobile platform is controlled to adjust the gimbal attitude of the mobile platform based on the tracking instruction to track the to-be-tracked target, and time-lapse shot is performed on the to-be-tracked target based on the time-lapse shot instruction, so that time-lapse shot and tracking are implemented on the to-be-tracked target simultaneously. Therefore, time-lapse shot and target tracking can be implemented simultaneously, without requiring the user to manually perform control. Further, a final effect of a shot picture can be improved, and photographing labor costs are reduced.

FIG. 2 is a flowchart of steps of another photographing method according to an embodiment of the present invention. The method may be applied to a mobile platform, where the mobile platform may be communicated with a control terminal. Specifically, as shown in FIG. 2, the method may include the following steps.

Step 201: Obtain a tracking instruction sent by the control terminal.

In this embodiment of the present invention, the mobile platform may obtain the tracking instruction by receiving a tracking instruction sent by the control terminal. By obtaining the tracking instruction, the mobile platform can perform target tracking based on the tracking instruction in a subsequent step.

Step 202: While performing time-lapse shot on a to-be-tracked target based on a time-lapse shot instruction, the control terminal adjusts a gimbal attitude of the mobile platform based on the tracking instruction, so that the to-be-tracked target is continuously displayed in a picture displayed on a display interface of the control terminal.

In this embodiment of the present invention, while the control terminal performs time-lapse shot on the to-be-tracked target based on the time-lapse shot instruction, the mobile platform adjusts the gimbal attitude of the mobile platform, so that time-lapse shot and tracking can be implemented on the to-be-tracked target simultaneously.

As described above, in the photographing processing method provided by this embodiment of the present invention, the tracking instruction sent by the control terminal is obtained; and then while the control terminal performs time-lapse shot on the to-be-tracked target based on the time-lapse shot instruction, the gimbal attitude of the mobile platform is adjusted based on the tracking instruction, so that the to-be-tracked target is continuously displayed in the picture displayed on the display interface of the control terminal. Therefore, time-lapse shot and target tracking can be implemented simultaneously, without requiring the user to manually perform control. Further, a final effect of a shot picture can be improved, and photographing labor costs are reduced.

FIG. 3-1 is a flowchart of steps of still another photographing method according to an embodiment of the present invention. The method may be applied to a system including a mobile platform and a control terminal, where the control terminal may be communicated with the mobile platform, and a time-lapse shot and tracking icon is provided on a display interface of the control terminal. Specifically, as shown in FIG. 3-1, the method may include the following steps.

Step 301: The control terminal displays the time-lapse shot and tracking icon.

Specifically, for an implementation of this step, reference may be made to step 101 described above. Details will not be described again herein in this embodiment of the present invention.

Step 302: The control terminal obtains a user's operation on the time-lapse shot and tracking icon, to generate the time-lapse shot instruction and the tracking instruction.

In this step, the obtaining a user's operation on the time-lapse shot and tracking icon may include: obtaining the user's operation of setting a time-lapse shot parameter and a target tracking parameter. Further, the control terminal may obtain the user's operation of setting the time-lapse shot parameter and the target tracking parameter after obtaining the user's preset operation on the time-lapse shot and tracking icon. In this embodiment of the present invention, the user's setting operation is obtained only after the user's preset operation on the time-lapse shot and tracking icon is obtained. This can ensure that the user's setting operation is obtained as needed by the user, and can avoid an unnecessary obtaining operation to some extent, and can further avoid waste of processing resources of the control terminal. The preset operation may be predefined as needed. For example, the preset operation may be a tapping operation, a double-tapping operation, or a touching and holding operation on the time-lapse shot and tracking icon. The time-lapse shot parameter may include at least one of a photographing interval duration and a total photographing duration. The photographing interval duration may be an interval duration between two adjacent photographing operations in time-lapse shot, and the total photographing duration may be a duration of the time-lapse shot operation. Further, the target tracking parameter may include at least one of a target tracking speed and a target display position. The target display position may be a display position of a to-be-tracked target in a picture. For example, the target display position may be a center of the picture, or may be a lower left corner of the picture. The target tracking speed may be a speed of tracking the to-be-tracked target. In different scenarios, the tracking speeds required may be different. For example, in a photographing scenario in which 360-degree photographing needs to be performed on the to-be-tracked target, a high tracking speed is usually required. However, in other photographing scenarios, a low tracking speed is usually required.

Specifically, the obtaining of the user's operation of setting the time-lapse shot parameter and the target tracking parameter may be implemented in an exemplary implementation 1 shown by the following steps 3021 and step 3022.

### Implementation 1:

Step 3021: The control terminal displays a recommended photographing parameter and a recommended tracking parameter.

In this step, the recommended photographing parameter may be a time-lapse shot parameter that is pre-collected and frequently used for time-lapse shot. Therefore, it can be ensured that time-lapse shot can be normally performed by using the recommended photographing parameter. Further, tracking parameters required in different scenarios may be different. Therefore, the recommended tracking parameter may be determined based on a photographing scenario corresponding to the image being photographed. Specifically, the control terminal may perform, by using a preset scene recognition algorithm, scene recognition on the picture displayed on the display interface, to obtain the photographing scenario corresponding to the picture, and then may determine, based on a preset correspondence between a photographing scenario and a tracking parameter, the tracking parameter corresponding to the photographing scenario corresponding to the picture, to obtain the recommended tracking parameter, so as to ensure that the displayed recommended tracking parameter can adapt to the current photographing scenario and further ensure a photographing effect in a subsequent step. The scene recognition algorithm may extract a feature of the picture, and then perform recognition based on the extracted feature, to determine the photographing scenario corresponding to the picture. The preset correspondence between a photographing scenario and a tracking parameter may be pre-generated. The correspondence may include different photographing scenarios and tracking parameters adapting to the photographing scenarios.

Step 3022: If the user's first confirmation operation is obtained, the control terminal determines the recommended photographing parameter and the recommended tracking parameter respectively as the time-lapse shot parameter and the target tracking parameter.

In this step, a specific operation form of the first confirmation operation may be preset as needed. For example, the first confirmation operation may be an operation of selecting a confirmation button by the user, where the confirmation button may be displayed on an interface displaying the recommended photographing parameter and the recommended tracking parameter. Further, if the first operation is obtained, it may be considered that the user wants to use the displayed recommended photographing parameter and recommended tracking parameter as the time-lapse shot parameter and the target tracking parameter. Correspondingly, the recommended photographing parameter and the recommended tracking parameter may be respectively determined as the time-lapse shot parameter and the target tracking parameter.

In this embodiment of the present invention, the recommended photographing parameter and the recommended tracking parameter are displayed, and if the first confirmation operation is obtained, the recommended photographing parameter and the recommended tracking parameter are respectively used as the time-lapse shot parameter and the target tracking parameter, so that the user can conveniently complete the operation of setting the time-lapse shot parameter and the target tracking parameter by performing only one confirmation operation, thereby further reducing operation costs of the user.

Further, the obtaining of the user's operation of setting the time-lapse shot parameter and the target tracking parameter may also be implemented in an exemplary implementation 2 shown by the following step 3023.

### Implementation 2:

Step 3023: The control terminal obtains the time-lapse shot parameter and the target tracking parameter that are independently set by the user.

In this step, the control terminal may display a parameter input interface, where the parameter input interface may be an interface that is pre-developed and used for inputting a parameter, and then the control terminal may obtain a photographing parameter input by the user by using the parameter input interface, to obtain the time-lapse shot parameter, and obtain a tracking parameter input by the user by using the parameter input interface, to obtain the target tracking parameter. In this embodiment of the present invention, the parameters input by the user are received; therefore, the user can set the parameters flexibly as needed, and operation flexibility of the user can be further improved to some extent.

Specifically, if the target tracking parameter includes the target tracking speed and the target display position, when setting the target tracking parameter, the control terminal may obtain a tracking speed input by the user in a tracking speed area in the parameter input interface to obtain the target tracking speed, and obtain the user's operation on a position setting icon in the parameter input interface to generate a position setting instruction. When the position setting instruction is generated, the control terminal may detect the user's tapping operation on the current picture after obtaining the user's operation on the position setting icon in the parameter input interface, and then generate the position setting instruction including information indicating a position tapped by the tapping operation, where the information indicating the position tapped by the tapping operation is display position information. For example, assuming that the position tapped by the tapping operation is a center of the picture, the display position information may be text information "center of the picture". Finally, a display position indicated by the display position information may be determined as the target display position. For example, the center of the picture may be determined as the target display position. In comparison with a manner of tracking the to-be-tracked target by directly using a default display position, in this embodiment of the present invention, the manner of determining the target display position based on the user's operation can make a subsequent tracking operation more compliant with the user's expectation, and may further improve satisfaction of the user with the photographing effect. For example, FIG. 3-2 is a schematic diagram of a parameter input interface according to an embodiment of the present invention. As shown in FIG. 3-2, the parameter input interface includes a photographing parameter area a, a tracking speed area b, and a position setting icon c. Correspondingly, the user may input a photographing parameter in the area a, input a tracking speed in the area b, and perform an operation on the icon c, to set the target display position.

Alternatively, the control terminal may display a plurality of candidate photographing parameters and a plurality of candidate tracking parameters, where the plurality of candidate photographing parameters and the plurality of candidate tracking parameters may be parameters that are pre-selected and whose use frequency is greater than a preset frequency threshold; then the control terminal may obtain the user's operation of making a selection from the plurality of candidate photographing parameters and operation of making a selection from the plurality of candidate tracking parameters, where the selection operation may be a tapping operation, a double-tapping operation, a touching and holding operation, or the like on a parameter; and then the control terminal determines, based on the user's operation of making the selection from the plurality of candidate photographing parameters and the operation of making the selection from the plurality of candidate tracking parameters, a candidate photographing parameter and a candidate tracking parameter that are selected by the user, as the time-lapse shot parameter and the target tracking parameter respectively. For example, FIG. 3-3 is a schematic diagram of a parameter selection interface according to an embodiment of the present invention. As shown in FIG. 3-3, the parameter selection interface includes three candidate photographing parameters: a candidate photographing parameter 1, a candidate photographing parameter 2, and a candidate photographing parameter 3, and includes three candidate tracking parameters: a candidate tracking parameter 1, a candidate tracking parameter 2, and a candidate tracking parameter 3. Correspondingly, assuming that the user selects the candidate photographing parameter 2 and the candidate tracking parameter 3, the control terminal may determine the candidate photographing parameter 2 as the time-lapse shot parameter, and determine the candidate tracking parameter 3 as the target tracking parameter. In this embodiment of the present invention, some parameters are displayed as candidate parameters, so that the user can complete the parameter setting by performing a selection operation. This can improve convenience of the user's operation to some extent.

Alternatively, the control terminal may obtain the time-lapse shot parameter and the target tracking speed that are sent by the mobile platform, where the time-lapse shot parameter and the target tracking speed may be determined by the mobile platform based on the user's operation on a specified key of the mobile platform, and the specified key may be pre-specified based on an actual request. In this embodiment of the present invention, the user can complete the parameter setting by performing the operation on the specified key of the mobile platform. Therefore, more options are provided for the user, and selectivity can be improved for the user to some extent.

In this embodiment of the present invention, the control terminal may determine the time-lapse shot parameter and the target tracking parameter based on the user's autonomous setting operation. This can further improve operability for the user to some extent and make the finally set parameter compliant with the requirement of the user, so that an image shot based on the parameters in a subsequent step is more compliant with the user's expectation.

Step 303: The control terminal obtains the user's operation on the picture displayed on the display interface, and determines the to-be-tracked target based on the user's operation on the picture displayed on the display interface.

Specifically, this step may be implemented by performing the following step 3031 and step 3032.

Step 3031: The control terminal displays a selection box in the picture displayed on the display interface.

In this step, a specific form of the selection box may be set as needed. For example, the selection may include a dot, a line, or a polygonal box. When the selection box is displayed, only one selection box may be displayed. Therefore, displaying only one selection box can save display resources to some extent while enabling the user to make a selection. For example, FIG. 3-4 is a schematic diagram of a selection box according to an embodiment of the present invention. As shown in FIG. 3-4, one selection box is displayed on the interface. Further, the interface may further display a "start time lapse" option, so that the user can manually control, based on the "start time lapse" option after selecting the to-be-tracked target based on the selection box, the control terminal to start performing time-lapse shot. Further, the interface may further display a "time-lapse parameter" option and a "tracking speed" option, and the user can view, by tapping the two options, a time-lapse shot parameter and a tracking parameter that are currently used. Alternatively, the control terminal may display a plurality of selection boxes, so that the user can make a selection conveniently. If a plurality of selection boxes is displayed, selection boxes may be displayed for all objects in the picture, or a selection box may be displayed only for mobile objects in the picture. This is not limited in this embodiment of the present invention.

Because an object that needs to be tracked is usually an object capable of moving, that is, the probability that a mobile object is selected is relatively high, displaying a selection box for each mobile object can avoid an unnecessary display operation to some extent, and can further save display resources of the control terminal. For example, FIG. 3-5 is a schematic diagram of another selection boxes according to an embodiment of the present invention. As shown in FIG. 3-5, a selection box is displayed for each mobile object on the interface.

Step 3032: The control terminal obtains the user's second confirmation operation on the selection box, and determines the to-be-tracked target based on the second confirmation operation.

In this step, if one selection box is displayed, the control terminal may obtain the user's operation of moving the selection box, to generate a target selection box. Correspondingly, in this case, the moving operation is the second confirmation operation. For example, the user can control to move the selection box by tapping other objects that are not selected in the picture or pressing a specified physical button of the control terminal, and correspondingly, the moving selection box is the target selection box. Then the control terminal may determine the to-be-tracked target based on the target selection box. Further, if a plurality of selection boxes is displayed, the control terminal may obtain the user's operation of making a selection from the plurality of selection boxes, to determine a target selection box, and determine the to-be-tracked target based on the target selection box. Correspondingly, in this case, the selection operation is the second confirmation operation. Specifically, the user may select, based on an object selected by each selection box, a selection box as a target selection box, and correspondingly, the control terminal may use the selected selection box as the target selection box.

It should be noted that after the control terminal determines the target selection box, the control terminal may further obtain the user's third confirmation operation on the target selection box displayed on the display interface of the control terminal, or obtain the user's third confirmation operation on a selection key of the mobile platform, to confirm the target selection box, where the selection key may be preset as needed, and the third confirmation operation may be preset as needed. For example, the third confirmation operation may be a tapping operation, a double-tapping operation, or a touching and holding operation. Correspondingly, the operation of determining the to-be-tracked target based on the target selection box may be performed after the confirmation. This can avoid a problem that a finally determined to-be-tracked target is inaccurate because the to-be-tracked target is determined based on a target selection box unintentionally selected by the user.

Further, if a selection box is displayed for each mobile object in the picture, the control terminal may obtain the user's operation of switching the selection box to determine a target selection box, and determine the to-be-tracked target based on the target selection box. Correspondingly, in this case, the switching operation is the second confirmation operation. Specifically, the switching operation may be an operation of switching the selected selection box. The user may switch the selected selection box as needed, and the control terminal may determine a selection box finally selected by the user, as the target selection box. Because the object that needs to be tracked is usually an object capable of moving, displaying a selection box for each mobile object can avoid displaying an unnecessary selection box to some extent, and can further save display resources of the control terminal.

Further, in any one of the foregoing cases, when the to-be-tracked target is determined based on the target selection box, a mobile object corresponding to the target selection box in the picture may be determined as the to-be-tracked target. Specifically, the mobile object corresponding to the target selection box in the picture may be a mobile object selected by the target selection box. For example, assuming that the mobile object selected by the target selection box is a person A, the control terminal may determine the person A as the to-be-tracked target. Because the target selection box is determined based on the user's operation, it may be considered that the mobile object corresponding to the target selection box in the picture is an object that the user wants to track. Therefore, determining the mobile object corresponding to the target selection box in the picture as the to-be-tracked target can ensure that the determined to-be-tracked target is the object that the user wants to track, thereby further improving the determining accuracy to some extent.

Step 304: The control terminal controls the mobile platform to adjust a gimbal attitude of the mobile platform based on the tracking instruction, and performs time-lapse shot on the to-be-tracked target based on the time-lapse shot instruction.

In this step, the tracking instruction may include a control parameter determined based on the target tracking parameter and the to-be-tracked target. The control terminal may send the tracking instruction carrying the control parameter to the mobile platform, to control the mobile platform to adjust the gimbal attitude of the mobile platform based on the tracking instruction. Specifically, the control parameter may be a target angular speed determined based on the target tracking parameter and the to-be-tracked target. Correspondingly, the control terminal may send the tracking instruction carrying the control parameter to the mobile platform based on the following sub-step (1) to sub-step (3).

Sub-step (1): At each interval of a preset interval duration, the control terminal calculates a position change of the to-be-tracked target in the preset interval duration.

In this sub-step, the preset interval duration may be preset as needed. For example, the preset interval duration may be 0.5 seconds, or may be 1 second. Specifically, during calculation of the position change, a reference coordinate system may be first established in the picture, then a coordinate change of the to-be-tracked target in the preset interval duration is captured in real time, and finally the coordinate change is determined as the position change.

Sub-step (2): The control terminal determines the target angular speed based on the position change and the target tracking parameter.

In this sub-step, the target angular speed may be a vector having a rotation direction and specific rotation degrees. Specifically, the control terminal may calculate, with reference to the target tracking speed and the position change that are included in the target tracking parameter, a rotation direction and rotation degrees that can keep the to-be-tracked target in a target display position of a picture shot by a photographing apparatus, to further obtain the target angular speed.

Sub-step (3): The control terminal uses the target angular speed as the control parameter, and sends the tracking instruction carrying the target angular speed to the mobile platform.

In this sub-step, the control terminal may insert the target angular speed in a preset position of the tracking instruction, and send the target angular speed to the mobile platform, so as to send the tracking instruction carrying the target angular speed to the mobile platform, where the preset position may be pre-specified. For example, the preset position may be a first position or a last position, or the like in the instruction. The target angular speed is sent to the mobile platform, such that the mobile platform can be directly controlled based on the target angular speed in the tracking instruction, and a control speed of the mobile platform can be increased to some extent.

Further, the control terminal may also send the tracking instruction carrying the control parameter to the mobile platform based on the following sub-step (4).

Sub-step (4): The control terminal uses the target tracking parameter and a result of determining the to-be-tracked target as the control parameter, and sends the tracking instruction carrying the target tracking parameter and the result of determining the to-be-tracked target to the mobile platform.

In this sub-step, the result of determining the to-be-tracked target is used to indicate the to-be-tracked target. For example, the result of determining the to-be-tracked target may be an identifier of the to-be-tracked target. Specifically, the control terminal may send the target tracking parameter and the result of determining the to-be-tracked target to the mobile platform by using the tracking instruction, so that the mobile platform determines the target angular speed and adjusts the posture based on the target tracking parameter and the result of determining the to-be-tracked target. Therefore, without performing calculation, the control terminal can control the mobile platform to perform an adjustment. This can save computing resources of the control terminal to some extent.

Further, in the case where the control terminal includes a photographing apparatus, the control terminal may control, based on the time-lapse shot instruction, the photographing apparatus to perform time-lapse shot on the to-be-tracked target, for example, may transfer the time-lapse shot instruction carrying the time-lapse shot parameter to the photographing apparatus based on internal parameter transfer, to control the photographing apparatus to perform time-lapse shot on the to-be-tracked target. If the control terminal is communicated with the photographing apparatus, that is, if the control terminal and the photographing apparatus are two independent devices, the control terminal may send the time-lapse shot instruction to the photographing apparatus through the communication between the control terminal and the photographing apparatus, to control the photographing apparatus to perform time-lapse shot on the to-be-tracked target based on the time-lapse shot instruction.

Specifically, during time-lapse shot of the to-be-tracked target, the to-be-tracked target may be photographed at each interval of a photographing interval duration until a photographing duration reaches the total photographing duration. For example, assuming that the photographing interval duration is 3 seconds, one photographing operation may be performed at each interval of 3 seconds. Alternatively, the time-lapse shot parameter may be sent to the mobile platform, so that the mobile platform performs an operation of photographing the to-be-tracked target at an interval of a photographing interval duration, until a photographing duration reaches the total photographing duration. Further, if the photographing duration of the time-lapse shot reaches the total photographing duration, it may be considered that the time-lapse shot is complete. In this case, the control terminal may stop performing this step. Therefore, in this automatic stop manner of the control terminal, the user does not need to perform control manually, and operation costs of the user can be reduced to some extent.

Certainly, if an ending instruction is obtained, the control terminal may also stop performing this step, where the ending instruction may be generated based on the user's operation on the control terminal or the mobile platform. Therefore, when the user does not want to perform time-lapse tracking and photographing, the user may stop time-lapse tracking and photographing quickly and conveniently by using the control terminal or the mobile platform. Specifically, an ending key may be provided on the display interface of the control terminal. Correspondingly, the control terminal may obtain the user's operation on the ending key, so as to obtain the ending instruction. The user's operation on the ending key may be a tapping operation, a double-tapping operation, a touching and holding operation, or the like on the ending key. For example, FIG. 3-6 is a schematic diagram of an interface in a tracking state. As shown in FIG. 3-6, the to-be-tracked target is continuously tracked, and the interface displays a "stop time lapse" button, where the "stop time lapse" button is the ending key. Further, the interface further displays a "time-lapse parameter" option and a "tracking speed" option. The user can view, by tapping the two options, a time-lapse shot parameter and a tracking parameter that are currently used. The interface further displays status alert information "tracking the target". Certainly, an ending key may also be provided by the mobile platform, and the control terminal may obtain the user's operation on the ending key in the mobile platform to obtain the ending instruction. Specifically, the operation of obtaining the user's operation on the ending key of the mobile platform to obtain the ending instruction may be implemented by receiving, by the control terminal, the ending instruction sent by the mobile platform.

Step 305: The mobile platform obtains the tracking instruction sent by the control terminal.

Specifically, for an implementation of this step, reference is made to the above step 201. Details will not be described again herein in this embodiment of the present invention.

Step 306: While the control terminal performs time-lapse shot on the to-be-tracked target based on the time-lapse shot instruction, the mobile platform adjusts the gimbal attitude of the mobile platform based on the tracking instruction, so that the to-be-tracked target is continuously displayed in the picture displayed on the display interface of the control terminal.

In this step, the tracking instruction may carry the target angular speed. Correspondingly, the mobile platform may adjust the gimbal attitude of the mobile platform based on the target angular speed to adjust a posture of the photographing apparatus. Specifically, the mobile platform may be controlled to rotate based on the target angular speed to adjust the pose. Therefore, the mobile platform can be directly controlled based on the target angular speed in the tracking instruction, and the control speed of the mobile platform can be improved to some extent.

Alternatively, the tracking instruction may carry the target tracking parameter and the result of determining the to-be-tracked target. Correspondingly, the mobile platform may calculate, at each intervals of a preset interval duration, the position change of the to-be-tracked target in the preset interval duration, then determine the target angular speed based on the position change and the target tracking parameter, and finally adjust the gimbal attitude of the mobile platform based on the target angular speed to adjust a posture of the photographing apparatus. Therefore, without performing calculation, the control terminal can control the mobile platform to perform an adjustment. This can save computing resources of the control terminal to some extent.

Further, a selection key for confirming the to-be-tracked target may be further provided in the mobile platform. Correspondingly, before performing this step, the mobile platform may further obtain the user's operation on the selection key, where the operation may be a tapping operation, a double-tapping operation, or a touching and holding operation on the selection key; and then confirm the to-be-tracked target based on the user's operation on the selection key. Specifically, after obtaining the user's operation on the selection key, the mobile platform may determine that the to-be-tracked target is the object that the user needs to track, and in this case, may confirm the to-be-tracked target, that is, determine that the to-be-tracked target is correct; and then start to perform this step after the confirmation. Therefore, confirming the to-be-tracked target before starting tracking can avoid a problem that an error is caused in a tracking operation due to an incorrect to-be-tracked target, and can further improve the tracking effect.

As described above, in the photographing processing method provided by this embodiment of the present invention, the control terminal displays the time-lapse shot and tracking icon; then obtains the user's operation on the time-lapse shot and tracking icon, to generate the time-lapse shot instruction and the tracking instruction; then determines the to-be-tracked target based on the user's operation on the picture displayed on the display interface; and finally controls the mobile platform to adjust the gimbal attitude of the mobile platform based on the tracking instruction, and performs time-lapse shot on the to-be-tracked target based on the time-lapse shot instruction. Correspondingly, the mobile platform obtains the tracking instruction sent by the control terminal, and while performing time-lapse shot on the to-be-tracked target based on the time-lapse shot instruction, the control terminal adjusts the gimbal attitude of the mobile platform based on the tracking instruction, so that the to-be-tracked target is continuously displayed in the picture displayed on the display interface of the control terminal. Therefore, time-lapse shot and target tracking can be implemented simultaneously, without requiring the user to manually perform control. Further, a final effect of a shot picture can be improved, and photographing labor costs are reduced.

FIG. 4 is a flowchart of steps of yet another photographing method according to an embodiment of the present invention. The method may be applied to a mobile platform, where the mobile platform may be communicated with a control terminal and configured to mount the control terminal, and a time-lapse tracking and photographing key is further provided on the mobile platform. Specifically, as shown in FIG. 4, the method may include the following steps.

Step 401: Obtain a user's operation on the time-lapse tracking and photographing key, to generate a time-lapse tracking and photographing trigger instruction.

In this embodiment of the present invention, the time-lapse tracking and photographing key may be any key pre-selected, based on an actual situation, from keys included in the mobile platform, or the time-lapse tracking and photographing key may be a combination of any plurality of keys included in the mobile platform. For example, a combination of a key 1 and a key 2 included in the mobile platform may be set as the time-lapse tracking and photographing key. Correspondingly, when detecting the user's operation of pressing the key 1 and the key 2 simultaneously, the mobile platform may determine that the user's operation on the time-lapse tracking and photographing key is obtained.

Further, if the user's operation on the time-lapse tracking and photographing key is obtained, it may be considered that the user needs to perform time-lapse tracking and photographing. In this case, the mobile platform may generate the time-lapse tracking and photographing trigger instruction, where the time-lapse tracking and photographing trigger instruction may be used to trigger a time-lapse tracking and photographing operation.

Step 402: Send the time-lapse tracking and photographing trigger instruction to the control terminal, so that the control terminal generates a time-lapse shot instruction and a tracking instruction.

In this embodiment of the present invention, the time-lapse shot instruction may be used to control the control terminal to perform time-lapse shot, and the tracking instruction may be used to control the mobile platform to track a to-be-tracked target. Therefore, the mobile platform can trigger the time-lapse tracking and photographing operation by sending the time-lapse tracking and photographing trigger instruction to the control terminal.

Step 403: Obtain the tracking instruction sent by the control terminal.

Specifically, for an implementation of this step, reference may be made to the implementation in the foregoing embodiments. Details will not be described again herein in this embodiment of the present invention.

Step 404: While performing time-lapse shot on the to-be-tracked target based on the time-lapse shot instruction, the control terminal adjusts a gimbal attitude of the mobile platform based on the tracking instruction, so that the to-be-tracked target is continuously displayed in a picture displayed on a display interface of the control terminal.

Specifically, for an implementation of this step, reference may be made to the implementation in the foregoing embodiments. Details will not be described again herein in this embodiment of the present invention.

As described above, in the photographing processing method provided by this embodiment of the present invention, the mobile platform obtains the user's operation on the time-lapse tracking and photographing key, to generate the time-lapse tracking and photographing trigger instruction, so that the user can trigger time-lapse tracking and photographing by operating the time-lapse tracking and photographing key on the mobile platform, which can further improve operability for the user to some extent; then sends the time-lapse tracking and photographing trigger instruction to the control terminal, so that the control terminal generates the time-lapse shot instruction and the tracking instruction; and then obtains the tracking instruction sent by the control terminal, and while performing time-lapse shot on the to-be-tracked target based on the time-lapse shot instruction, the control terminal adjusts the gimbal attitude of the mobile platform based on the tracking instruction, so that the to-be-tracked target is continuously displayed in the picture displayed on the display interface of the control terminal. Therefore, time-lapse shot and target tracking can be implemented simultaneously, without requiring the user to manually perform control. Further, a final effect of a shot picture can be improved, and photographing labor costs are reduced.

FIG. 5 is a flowchart of steps of yet another photographing method according to an embodiment of the present invention. The method may be applied to a control terminal, where the control terminal may be communicated with a mobile platform, and the control terminal may be further mounted on the mobile platform. Specifically, as shown in FIG. 5, the method may include the following steps.

Step 501: Obtain a time-lapse tracking and photographing trigger instruction sent by the mobile platform.

In this step, the control terminal may obtain the time-lapse tracking and photographing trigger instruction by receiving the time-lapse tracking and photographing trigger instruction.

Step 502: Generate a time-lapse shot instruction and a tracking instruction.

In this embodiment of the present invention, if the control terminal receives the time-lapse tracking and photographing trigger instruction, it indicates that a user needs to perform time-lapse tracking and photographing. Therefore, the control terminal may generate the time-lapse shot instruction and the tracking instruction. Specifically, the time-lapse shot instruction may be a time-lapse shot parameter, and the tracking instruction may be a control parameter determined based on a target tracking parameter and a to-be-tracked target. Correspondingly, the control terminal may obtain the user's operation of setting the time-lapse shot parameter and the target tracking parameter, to determine the time-lapse shot parameter and the target tracking parameter, and then determine the control parameter based on the target tracking parameter and the to-be-tracked target. Specifically, for specific implementations of determining the time-lapse shot parameter, the target tracking parameter, and the control parameter, reference may be made to the content in the foregoing embodiments. Details will not be described again herein in this embodiment of the present invention.

Step 503: Obtain the user's operation on a picture displayed on a display interface, and determine the to-be-tracked target based on the user's operation on the picture displayed on the display interface, where the picture includes a picture obtained by the control terminal.

Specifically, for an implementation of this step, reference may be made to the implementation in the foregoing embodiments. Details will not be described again herein in this embodiment of the present invention.

Step 504: Perform time-lapse shot on the to-be-tracked target based on the time-lapse shot instruction, and control the mobile platform to adjust a gimbal attitude of the mobile platform based on the tracking instruction to track the to-be-tracked target, so that the to-be-tracked target is continuously displayed on the display interface, so as to implement time-lapse shot and tracking on the to-be-tracked target simultaneously.

Specifically, for an implementation of this step, reference may be made to the implementation in the foregoing embodiments. Details will not be described again herein in this embodiment of the present invention.

As described above, in the photographing processing method provided by this embodiment of the present invention, the control terminal obtains the time-lapse tracking and photographing trigger instruction sent by the mobile platform; then generates the time-lapse shot instruction and the tracking instruction; then obtains the user's operation on the picture displayed on the display interface, and determines the to-be-tracked target based on the user's operation on the picture displayed on the display interface; and finally performs time-lapse shot on the to-be-tracked target based on the time-lapse shot instruction, and controls the mobile platform to adjust the gimbal attitude of the mobile platform based on the tracking instruction, so as to implement time-lapse shot and tracking on the to-be-tracked target simultaneously. Therefore, time-lapse shot and target tracking can be implemented simultaneously, without requiring the user to manually perform control. Further, a final effect of a shot picture can be improved, and photographing labor costs are reduced.

FIG. 6 is a flowchart of steps of yet another photographing method according to an embodiment of the present invention. The method may be applied to a system including a mobile platform and a control terminal, where the mobile platform may be communicated with the control terminal and configured to mount the control terminal, and a time-lapse tracking and photographing key is provided on the mobile platform. Specifically, as shown in FIG. 6, the method may include the following steps.

Step 601: The mobile platform obtains a user's operation on the time-lapse tracking and photographing key, to generate a time-lapse tracking and photographing trigger instruction.

Specifically, for an implementation of this step, reference may be made to the implementation in the foregoing embodiments. Details will not be described again herein in this embodiment of the present invention.

Step 602: The mobile platform sends the time-lapse shot trigger instruction to the control terminal.

Specifically, for an implementation of this step, reference may be made to the implementation in the foregoing embodiment. Details will not be described again herein in this embodiment of the present invention.

Step 603: The control terminal obtains the time-lapse shot trigger instruction sent by the mobile platform.

Specifically, for an implementation of this step, reference may be made to the implementation in the foregoing embodiment. Details will not be described again herein in this embodiment of the present invention.

Step 604: The control terminal generates a time-lapse shot instruction and a tracking instruction, where the time-lapse shot instruction is used to control the control terminal to perform time-lapse shot, and the tracking instruction is used to control the mobile platform to track a to-be-tracked target.

Specifically, for an implementation of this step, reference may be made to the implementation in the foregoing embodiment. Details will not be described again herein in this embodiment of the present invention.

Step 605: The control terminal obtains the user's operation on a picture displayed on a display interface, and determines the to-be-tracked target based on the user's operation on the picture displayed on the display interface, where the picture includes a picture obtained by the control terminal.

Specifically, for an implementation of this step, reference may be made to the implementation in the foregoing embodiment. Details will not be described again herein in this embodiment of the present invention.

Step 606: The control terminal performs time-lapse shot on the to-be-tracked target based on the time-lapse shot instruction, and controls the mobile platform to adjust a gimbal attitude of the mobile platform based on the tracking instruction.

Specifically, for an implementation of this step, reference may be made to the implementation in the foregoing embodiment. Details will not be described again herein in this embodiment of the present invention.

Step 607: The mobile platform obtains the tracking instruction sent by the control terminal.

Specifically, for an implementation of this step, reference may be made to the implementation in the foregoing embodiment. Details will not be described again herein in this embodiment of the present invention.

Step 608: While the control terminal performs time-lapse shot on the to-be-tracked target based on the time-lapse shot instruction, the mobile platform adjusts the gimbal attitude of the mobile platform based on the tracking instruction, so that the to-be-tracked target is continuously displayed in the picture displayed on the display interface of the control terminal.

Specifically, for an implementation of this step, reference may be made to the implementation in the foregoing embodiment. Details will not be described again herein in this embodiment of the present invention.

As described above, in the photographing processing method provided by this embodiment of the present invention, the mobile platform generates the time-lapse tracking and photographing trigger instruction based on the user's operation on the time-lapse tracking and photographing key, and sends the time-lapse tracking and photographing trigger instruction to the control terminal; and the control terminal obtains the time-lapse tracking and photographing trigger instruction sent by the mobile platform, then generates the time-lapse shot instruction and the tracking instruction, then obtains the user's operation on the picture displayed on the display interface, and determines the to-be-tracked target based on the user's operation on the picture displayed on the display interface, and finally performs time-lapse shot on the to-be-tracked target based on the time-lapse shot instruction, and controls the mobile platform to adjust the gimbal attitude of the mobile platform based on the tracking instruction, so as to implement time-lapse shot and tracking on the to-be-tracked target simultaneously. Therefore, time-lapse shot and target tracking can be implemented simultaneously, without requiring the user to manually perform control. Further, a final effect of a shot picture can be improved, and photographing labor costs are reduced.

An embodiment of the present invention further provides a photographing method, where the photographing method may be applied to an application environment including only a mobile platform, the mobile platform may be provided with a display interface and a photographing apparatus, and the mobile platform may be communicated with the photographing apparatus.

In the application environment, the photographing apparatus may be fixed on the mobile platform, and the mobile platform may change a photographing angle of the photographing apparatus by adjusting a gimbal attitude. Further, the mobile platform may further control the photographing apparatus to photograph a to-be-tracked target, so as to track the to-be-tracked target. In this way, photographing and tracking can be performed simultaneously, without requiring a user to perform a manual adjustment.

The following describes in detail the foregoing photographing method with the embodiment shown in FIG. 7.

FIG. 7 is a flowchart of steps of yet another photographing method according to an embodiment of the present invention. The method may be applied to a mobile platform, where the mobile platform may be provided with a display interface and a photographing apparatus, and the mobile platform may be communicated with the photographing apparatus. Specifically, as shown in FIG. 7, the method may include the following steps.

Step 701: Obtain a user's operation on a time-lapse shot and tracking icon on the display interface, to generate a time-lapse shot instruction and a tracking instruction, where the time-lapse shot instruction is used to control the photographing apparatus to perform time-lapse shot, and the tracking instruction is used to control the mobile platform to track a to-be-tracked target for photographing.

In this embodiment of the present invention, the time-lapse shot and tracking icon may be arranged on any interface displayed by the display interface of the mobile platform. For example, the time-lapse shot and tracking icon may be arranged on a main interface of the mobile platform, or may be arranged on an interface in a preset application program installed on the mobile platform. Further, a specific pattern of the time-lapse shot and tracking icon may be set as needed. For example, the time-lapse shot and tracking icon may be set as a round button or a square button marked with the text "time-lapse tracking". This is not limited in this embodiment of the present invention.

Step 702: Obtain the user's operation on a picture displayed on the display interface, and determine the to-be-tracked target based on the user's operation on the picture displayed on the display interface.

Specifically, for an implementation of this step, reference may be made to the implementation in the foregoing embodiment. Details will not be described again herein in this embodiment of the present invention.

Step 703: Control the photographing apparatus based on the time-lapse shot instruction to perform time-lapse shot on the to-be-tracked target, and adjust a gimbal attitude of the mobile platform based on the tracking instruction, so that the to-be-tracked target is continuously displayed in the picture displayed on the display interface, so as to implement time-lapse shot and tracking on the to-be-tracked target simultaneously.

Specifically, for an implementation of this step, reference may be made to the implementation in the foregoing embodiment. Details will not be described again herein in this embodiment of the present invention.

As described above, in the photographing processing method provided by this embodiment of the present invention, the mobile platform obtains the user's operation on the time-lapse shot and tracking icon on the display interface, to generate the time-lapse shot instruction and the tracking instruction; then obtains the user's operation on the picture displayed on the display interface, and determines the to-be-tracked target based on the user's operation on the picture displayed on the display interface; and finally controls the photographing apparatus based on the time-lapse shot instruction to perform time-lapse shot on the to-be-tracked target, and adjusts the gimbal attitude of the mobile platform based on the tracking instruction, so as to implement time-lapse shot and tracking on the to-be-tracked target simultaneously. Therefore, time-lapse shot and target tracking can be implemented simultaneously, without requiring the user to manually perform control. Further, a final effect of a shot picture can be improved, and photographing labor costs are reduced.

FIG. 8 is a flowchart of steps of yet another photographing method according to an embodiment of the present invention, where the method may be applied to a control terminal. As shown in FIG. 8, the method may include the following steps.

Step 801: Obtain a time-lapse shot parameter and a target tracking parameter, and determine a to-be-tracked target.

In this step, the time-lapse shot parameter may include at least one of a photographing interval duration and a total photographing duration, and the target tracking parameter may include at least one of a target tracking speed and a target display position. Specifically, when the time-lapse shot parameter and the target tracking parameter are obtained, a recommended photographing parameter and a recommended tracking parameter may be displayed; and if a user's first confirmation operation is obtained, the recommended photographing parameter and the recommended tracking parameter are determined respectively as the time-lapse shot parameter and the target tracking parameter; or the time-lapse shot parameter and the target tracking parameter that are independently set by a user are obtained.

Further, an implementation of obtaining the time-lapse shot parameter and the target tracking parameter that are independently set by the user may be:
displaying a parameter input interface; and obtaining a photographing parameter input by the user by using the parameter input interface, to obtain the time-lapse shot parameter, and obtaining a tracking parameter input by the user by using the parameter input interface, to obtain the target tracking parameter, where specifically, if the target tracking parameter includes the target tracking speed and the target display position, the operation of obtaining a tracking parameter input by the user by using the parameter input interface, to obtain the target tracking parameter may include: obtaining a tracking speed input by the user in a tracking speed area in the parameter input interface, to obtain the target tracking speed, and obtaining the user's operation on a position setting icon in the parameter input interface, to generate a position setting instruction, where the position setting instruction carries display position information; and determining a display position indicated by the display position information as the target display position; or
displaying a plurality of candidate photographing parameters and a plurality of candidate tracking parameters; obtaining the user's operation of making a selection from the plurality of candidate photographing parameters, and operation of making a selection from the plurality of candidate tracking parameters; and determining, based on the user's operation of making the selection from the plurality of candidate photographing parameters and operation of making the selection from the plurality of candidate tracking parameters, a candidate photographing parameter and a candidate tracking parameter that are selected by the user, as the time-lapse shot parameter and the target tracking parameter respectively; or obtaining the time-lapse shot parameter and the target tracking speed that are sent by a mobile platform, where the time-lapse shot parameter and the target tracking speed are determined by the mobile platform based on the user's operation on a specified key in the mobile platform. For a specific implementation of each of the foregoing steps, reference may be made to the implementation in the foregoing embodiment. Details will not be described again herein in this embodiment of the present invention.

Further, the operation of determining a to-be-tracked target may include: displaying a selection box in a picture displayed on a display interface; and obtaining the user's second confirmation operation on the selection box, and determining the to-be-tracked target based on the second confirmation operation. Specifically, one or more selection boxes may be displayed. For example, a selection box is displayed for each mobile object in the picture. Further, there may be one selection box, and correspondingly, the control terminal may obtain the user's operation of moving the selection box, to generate a target selection box, and determine the to-be-tracked target based on the target selection box; or there may be a plurality of selection boxes, and correspondingly, the control terminal may obtain the user's operation of making a selection from the plurality of selection boxes, to determine a target selection box, and determine the to-be-tracked target based on the target selection box. Further, if a selection box is displayed for each mobile object in the picture, the user's operation of switching the selection box may be obtained, to determine a target selection box; and the to-be-tracked target is determined based on the target selection box. When the to-be-tracked target is determined based on the target selection box, a mobile object corresponding to the target selection box in the picture may be determined as the to-be-tracked target. For a specific implementation of each of the foregoing steps, reference may be made to the implementation in the foregoing embodiment. Details will not be described again herein in this embodiment of the present invention.

Step 802: Photograph the to-be-tracked target based on the time-lapse shot parameter; and send a control instruction to the mobile platform based on the target tracking parameter and the to-be-tracked target, to control the mobile platform to adjust a gimbal attitude of the mobile platform based on the tracking instruction, so that the to-be-tracked target is continuously displayed in the picture displayed on the display interface of the control terminal, so as to implement time-lapse shot and tracking on the to-be-tracked target simultaneously.

In this embodiment of the present invention, the control instruction may include a tracking parameter determined based on the target tracking parameter and the to-be-tracked target. Specifically, for a manner of determining the control parameter, reference may be made to the descriptions in the foregoing embodiment. Details will not be described again herein in this embodiment of the present invention.

As described above, in the photographing processing method provided by this embodiment of the present invention, the control terminal obtains the time-lapse shot parameter and the target tracking parameter, and determines the to-be-tracked target; photographs the to-be-tracked target based on the time-lapse shot parameter; and sends the control instruction to the mobile platform based on the target tracking parameter and the to-be-tracked target, to control the mobile platform to adjust the gimbal attitude of the mobile platform based on the tracking instruction, so as to implement time-lapse shot and tracking on the to-be-tracked target simultaneously. Therefore, time-lapse shot and target tracking can be implemented simultaneously, without requiring the user to manually perform control. Further, a final effect of a shot picture can be improved, and photographing labor costs are reduced.

FIG. 9 is a flowchart of steps of yet another photographing method according to an embodiment of the present invention, where the method may be applied to a mobile platform. As shown in FIG. 9, the method may include the following steps.

Step 901: While a control terminal photographs a to-be-tracked target based on a time-lapse shot parameter, obtain a control instruction sent by the control terminal, where the control instruction is sent by the control terminal based on a target tracking parameter and the to-be-tracked target.

Specifically, the mobile platform may obtain, by receiving the control instruction, the control instruction sent by the control terminal.

Step 902: Adjust a gimbal attitude of the mobile platform based on the control instruction, so that the to-be-tracked target is continuously displayed in a picture displayed on a display interface of the control terminal, to implement time-lapse shot and tracking on the to-be-tracked target simultaneously.

The control instruction may include a target angular speed; and correspondingly, the operation of adjusting a gimbal attitude of the mobile platform based on the control instruction may include: adjusting the gimbal attitude of the mobile platform based on the target angular speed to adjust a posture of a photographing apparatus. Further, the control instruction includes the target tracking parameter and a result of determining the to-be-tracked target, and the result of determining the to-be-tracked target is used to indicate the to-be-tracked target; and correspondingly, the operation of adjusting a gimbal attitude of the mobile platform based on the control instruction may include: at each interval of a preset interval duration, calculating a position change of the to-be-tracked target in the preset interval duration; determining a target angular speed based on the position change and the target tracking parameter; and adjusting the gimbal attitude of the mobile platform based on the target angular speed to adjust a posture of a photographing apparatus. Specifically, for an implementation of each operation, reference may be made to the implementation of adjusting the gimbal attitude of the mobile platform based on the tracking instruction in the foregoing embodiments. Details will not described again herein in this embodiment of the present invention.

As described above, in the photographing processing method provided by this embodiment of the present invention, while the control terminal photographs the to-be-tracked target based on the time-lapse shot parameter, the mobile platform obtains the control instruction sent by the control terminal, and adjusts the gimbal attitude of the mobile platform based on the control instruction, so that the to-be-tracked target is continuously displayed in the picture displayed on the display interface of the control terminal, so as to implement time-lapse shot and tracking on the to-be-tracked target simultaneously. Therefore, time-lapse shot and target tracking can be implemented simultaneously, without requiring the user to manually perform control. Further, a final effect of a shot picture can be improved, and photographing labor costs are reduced.

FIG. 10 is a flowchart of steps of yet another photographing method according to an embodiment of the present invention. The method may be applied to a system including a mobile platform and a control terminal, where the control terminal may be communicated with the mobile platform. As shown in FIG. 10, the method may include the following steps.

Step 1001: The control terminal obtains a time-lapse shot parameter and a target tracking parameter, and determines a to-be-tracked target.

Step 1002: The control terminal photographs the to-be-tracked target based on the time-lapse shot parameter, and sends a control instruction to the mobile platform based on the target tracking parameter and the to-be-tracked target.

Step 1003: The mobile platform obtains the control instruction sent by the control terminal.

Step 1004: While the control terminal photographs the to-be-tracked target based on the time-lapse shot parameter, the mobile platform adjusts a gimbal attitude of the mobile platform based on the control instruction, so that the to-be-tracked target is continuously displayed in a picture displayed on a display interface of the control terminal, to implement time-lapse shot and tracking on the to-be-tracked target simultaneously.

As described above, in the photographing processing method provided by this embodiment of the present invention, the control terminal obtains the time-lapse shot parameter and the target tracking parameter, determines the to-be-tracked target, photographs the to-be-tracked target based on the time-lapse shot parameter, and sends the control instruction to the mobile platform based on the target tracking parameter and the to-be-tracked target; and while the control terminal photographs the to-be-tracked target based on the time-lapse shot parameter, the mobile platform adjusts the gimbal attitude of the mobile platform based on the control instruction, to implement time-lapse shot and tracking on the to-be-tracked target simultaneously. Therefore, time-lapse shot and target tracking can be implemented simultaneously, without requiring the user to manually perform control. Further, a final effect of a shot picture can be improved, and photographing labor costs are reduced.

FIG. 11 is a block diagram of a photographing device according to an embodiment of the present invention. The device 110 may be applied to a control terminal, where the control terminal is communicated with a mobile platform, and a time-lapse shot and tracking icon is provided on a display interface of the control terminal. As shown in FIG. 11, the device 110 may include:
a display device 1101, configured to display the time-lapse shot and tracking icon, where the time-lapse shot and tracking icon is used to indicate a time-lapse shot instruction and a tracking instruction, the time-lapse shot instruction is used to control the control terminal to perform time-lapse shot, and the tracking instruction is used to control the mobile platform to track a to-be-tracked target;
a first obtaining device 1102, configured to obtain a user's operation on the time-lapse shot and tracking icon, to generate the time-lapse shot instruction and the tracking instruction;
a second obtaining device 1103, configured to obtain the user's operation on a picture displayed on the display interface, and determine the to-be-tracked target based on the user's operation on the picture displayed on the display interface, where the picture includes a picture obtained by the control terminal; and
a control device 1104, configured to control the mobile platform to adjust a gimbal attitude of the mobile platform based on the tracking instruction to track the to-be-tracked target, so that the to-be-tracked target is continuously displayed on the display interface, and perform time-lapse shot on the to-be-tracked target based on the time-lapse shot instruction, so as to implement time-lapse shot and tracking on the to-be-tracked target simultaneously.

Optionally, the first obtaining device 1102 includes:
an obtaining sub-device, configured to obtain the user's operation of setting a time-lapse shot parameter and a target tracking parameter.

Optionally, the obtaining sub-device includes:
an obtaining unit, configured to: if the user's preset operation on the time-lapse shot and tracking icon is obtained, obtain the user's operation of setting the time-lapse shot parameter and the target tracking parameter.

Optionally, the time-lapse shot parameter includes at least one of a photographing interval duration and a total photographing duration; and/or
the target tracking parameter includes at least one of a target tracking speed and a target display position.

Optionally, the obtaining unit is specifically configured to:
display a recommended photographing parameter and a recommended tracking parameter; and if the user's first confirmation operation is obtained, determine the recommended photographing parameter and the recommended tracking parameter respectively as the time-lapse shot parameter and the target tracking parameter; or
obtain the time-lapse shot parameter and the target tracking parameter that are independently set by the user.

Optionally, the obtaining unit is further specifically configured to:
display a parameter input interface; and obtain a photographing parameter input by the user by using the parameter input interface, to obtain the time-lapse shot parameter, and obtain a tracking parameter input by the user by using the parameter input interface, to obtain the target tracking parameter; or
display a plurality of candidate photographing parameters and a plurality of candidate tracking parameters; obtain the user's operation of making a selection from the plurality of candidate photographing parameters, and operation of making a selection from the plurality of candidate tracking parameters; and determine, based on the user's operation of making the selection from the plurality of candidate photographing parameters and operation of making the selection from the plurality of candidate tracking parameters, a candidate photographing parameter and a candidate tracking parameter that are selected by the user, as the time-lapse shot parameter and the target tracking parameter respectively; or
obtain the time-lapse shot parameter and the target tracking speed that are sent by the mobile platform, where the time-lapse shot parameter and the target tracking speed are determined by the mobile platform based on the user's operation on a specified key in the mobile platform.

Optionally, the target tracking parameter includes the target tracking speed and a target display position; and
the obtaining unit is further specifically configured to:
obtain a tracking speed input by the user in a tracking speed area in the parameter input interface, to obtain the target tracking speed, and obtain the user's operation on a position setting icon in the parameter input interface, to generate a position setting instruction, where the position setting instruction carries display position information; and
determine a display position indicated by the display position information as the target display position.

Optionally, the time-lapse shot instruction includes the time-lapse shot parameter; and
the control device 1104 includes:
a photographing sub-device, configured to photograph the to-be-tracked target at intervals of one photographing interval duration, until a photographing duration reaches the total photographing duration; or
a first sending sub-device, configured to send the time-lapse shot parameter to the mobile platform, so that the mobile platform performs the operation of photographing the to-be-tracked target at intervals of one photographing interval duration, until a photographing duration reaches the total photographing duration.

Optionally, the tracking instruction includes a control parameter determined based on the target tracking parameter and the to-be-tracked target; and
the control device 1104 includes:
a second sending sub-device, configured to send the tracking instruction carrying the control parameter to the mobile platform, to control the mobile platform to adjust the gimbal attitude of the mobile platform based on the tracking instruction.

Optionally, the second sending sub-device is specifically configured to:
at each interval of a preset interval duration, calculate a position change of the to-be-tracked target in the preset interval duration; and determine a target angular speed based on the position change and the target tracking parameter; and
use the target angular speed as the control parameter, and send the tracking instruction carrying the target angular speed to the mobile platform.

Optionally, the second sending sub-device is specifically configured to:
use the target tracking parameter and a result of determining the to-be-tracked target as the control parameter, and send the tracking instruction carrying the target tracking parameter and the result of determining the to-be-tracked target to the mobile platform, where the result of determining the to-be-tracked target is used to indicate the to-be-tracked target.

Optionally, the device 110 further includes:
a first stopping apparatus, configured to: if an ending instruction is obtained, stop the operation of performing time-lapse shot based on the time-lapse shot instruction, and stop the operation of controlling the mobile platform to adjust a gimbal attitude of the mobile platform based on the tracking instruction and the to-be-tracked target to track the to-be-tracked target.

Optionally, the device 110 further includes:
a third obtaining apparatus, configured to: if an ending key is provided on the display interface of the control terminal, obtain the user's operation on the ending key, to obtain the ending instruction; or
a fourth obtaining apparatus, configured to: if an ending key is provided in the mobile platform, obtain the user's operation on the ending key in the mobile platform, to obtain the ending instruction.

Optionally, the device 110 further includes:
a second stopping apparatus, configured to: if a photographing duration of the time-lapse shot reaches the total photographing duration, stop the operation of performing time-lapse shot based on the time-lapse shot instruction, and stop the operation of controlling the mobile platform to adjust a gimbal attitude of the mobile platform based on the tracking instruction and the to-be-tracked target to track the to-be-tracked target.

Optionally, the second obtaining device 1104 is specifically configured to:
display a selection box in the picture displayed on the display interface; and
obtain the user's second confirmation operation on the selection box, and determine the to-be-tracked target based on the second confirmation operation.

Optionally, the selection box includes a dot, a line, or a polygonal box.

Optionally, the second obtaining device 1104 is further specifically configured to:
if there is one selection box, obtain the user's operation of moving the selection box, to generate a target selection box, and determine the to-be-tracked target based on the target selection box; or
if there are a plurality of selection boxes, obtain the user's operation of making a selection from the plurality of selection boxes, to determine a target selection box, and determine the to-be-tracked target based on the target selection box.

Optionally, the second obtaining device 1104 is further specifically configured to:
display a selection box for each mobile object in the picture.

Optionally, the second obtaining device is further specifically configured to:
obtain the user's operation of switching the selection box to determine a target selection box; and
determine the to-be-tracked target based on the target selection box.

Optionally, the second obtaining device is further specifically configured to:
determine a mobile object corresponding to the target selection box in the picture as the to-be-tracked target.

Optionally, the device 110 further includes:
a first confirmation apparatus, configured to obtain the user's third confirmation operation on the target selection box displayed on the display interface of the control terminal, to confirm the target selection box; or
a second confirmation apparatus, configured to obtain the user's third confirmation operation on a selection key in the mobile platform, to confirm the target selection box.

Optionally, the third confirmation operation includes: touching and holding, tapping, or double-tapping.

Optionally, the control terminal includes a photographing apparatus, and the control device 1104 is further specifically configured to control the photographing apparatus based on the time-lapse shot instruction to perform time-lapse shot on the to-be-tracked target.

Optionally, the control terminal is communicated with a photographing apparatus, and the control device 1104 is further specifically configured to:
send the time-lapse shot instruction to the photographing apparatus, to control the photographing apparatus to perform time-lapse shot on the to-be-tracked target based on the time-lapse shot instruction.

As described above, the photographing processing device provided by this embodiment of the present invention displays the time-lapse shot and tracking icon; then obtains the user's operation on the time-lapse shot and tracking icon, to generate the time-lapse shot instruction and the tracking instruction; then determines the to-be-tracked target based on the user's operation on the picture displayed on the display interface; and finally controls the mobile platform to adjust the gimbal attitude of the mobile platform based on the tracking instruction to track the to-be-tracked target, and performs time-lapse shot on the to-be-tracked target based on the time-lapse shot instruction, so as to implement time-lapse shot and tracking on the to-be-tracked target simultaneously. Therefore, time-lapse shot and target tracking can be implemented simultaneously, without requiring the user to manually perform control. Further, a final effect of a shot picture can be improved, and photographing labor costs are reduced.

FIG. 12 is a block diagram of another photographing device according to an embodiment of the present invention. The device 120 may be applied to a mobile platform, where the mobile platform is communicated with a control terminal. As shown in FIG. 12, the device 120 may include:
a first obtaining device 1201, configured to obtain a tracking instruction sent by the control terminal; and
an adjustment device 1202, configured to: while the control terminal performs time-lapse shot on a to-be-tracked target based on a time-lapse shot instruction, adjust a gimbal attitude of the mobile platform based on the tracking instruction, so that the to-be-tracked target is continuously displayed in a picture displayed on a display interface of the control terminal.

Optionally, the tracking instruction carries a target angular speed; and
the adjustment device 1202 is specifically configured to:
adjust the gimbal attitude of the mobile platform based on the target angular speed to adjust a posture of a photographing apparatus.

Optionally, the tracking instruction carries a target tracking parameter and a result of determining the to-be-tracked target, and the result of determining the to-be-tracked target is used to indicate the to-be-tracked target; and
the adjustment device 1202 is further specifically configured to:
at each interval of a preset interval duration, calculate a position change of the to-be-tracked target in the preset interval duration;
determine a target angular speed based on the position change and the target tracking parameter; and
adjust the gimbal attitude of the mobile platform based on the target angular speed to adjust a posture of a photographing apparatus.

Optionally, the control terminal includes the photographing apparatus, or the control terminal is communicated with the photographing apparatus.

Optionally, a selection key is provided in the mobile platform, the selection key is used to confirm the to-be-tracked target, and the device 120 further includes:
a second obtaining device, configured to obtain a user's operation on the selection key; and
a confirmation apparatus, configured to confirm the to-be-tracked target based on the user's operation on the selection key.

Optionally, after the confirmation apparatus confirms the to-be-tracked target, the adjustment device performs the operation of controlling the mobile platform to adjust the gimbal attitude of the mobile platform based on the tracking instruction, so that the to-be-tracked target is continuously displayed in a picture captured by a photographing apparatus.

As described above, the photographing processing device provided by this embodiment of the present invention obtains the tracking instruction sent by the control terminal; and then while the control terminal performs time-lapse shot on the to-be-tracked target based on the time-lapse shot instruction, adjusts the gimbal attitude of the mobile platform based on the tracking instruction, so that the to-be-tracked target is continuously displayed in the picture displayed on the display interface of the control terminal. Therefore, time-lapse shot and target tracking can be implemented simultaneously, without requiring the user to manually perform control. Further, a final effect of a shot picture can be improved, and photographing labor costs are reduced.

FIG. 13 is a block diagram of a photographing system according to an embodiment of the present invention. As shown in FIG. 13, the system 130 may include:
a system of a mobile platform 1301 and a control terminal 1302, where the control terminal 1302 is communicated with the mobile platform 1301, and a time-lapse shot and tracking icon is provided on a display interface of the control terminal 1302;
the control terminal 1302 is configured to display the time-lapse shot and tracking icon;
the control terminal 1302 is configured to obtain a user's operation on the time-lapse shot and tracking icon, to generate the time-lapse shot instruction and the tracking instruction;
the control terminal 1302 is configured to obtain the user's operation on a picture displayed on the display interface, and determine the to-be-tracked target based on the user's operation on the picture displayed on the display interface, where the picture includes a picture obtained by the control terminal 1302;
the control terminal 1302 is configured to control the mobile platform 1301 to adjust a gimbal attitude of the mobile platform 1301 based on the tracking instruction, and perform time-lapse shot on the to-be-tracked target based on the time-lapse shot instruction;
the mobile platform 1301 is configured to obtain the tracking instruction sent by the control terminal 1302; and
the mobile platform 1301 is configured to: while the control terminal 1302 performs time-lapse shot on the to-be-tracked target based on the time-lapse shot instruction, adjust the gimbal attitude of the mobile platform 1301 based on the tracking instruction, so that the to-be-tracked target is continuously displayed in the picture displayed on the display interface of the control terminal.

As described above, in the photographing processing system provided by this embodiment of the present invention, the control terminal displays the time-lapse shot and tracking icon; then obtains the user's operation on the time-lapse shot and tracking icon, to generate the time-lapse shot instruction and the tracking instruction; then determines the to-be-tracked target based on the user's operation on the picture displayed on the display interface; and finally controls the mobile platform to adjust the gimbal attitude of the mobile platform based on the tracking instruction, and performs time-lapse shot on the to-be-tracked target based on the time-lapse shot instruction. Correspondingly, the mobile platform obtains the tracking instruction sent by the control terminal, and while performing time-lapse shot on the to-be-tracked target based on the time-lapse shot instruction, the control terminal adjusts the gimbal attitude of the mobile platform based on the tracking instruction, so that the to-be-tracked target is continuously displayed in the picture displayed on the display interface of the control terminal. Therefore, time-lapse shot and target tracking can be implemented simultaneously, without requiring the user to manually perform control. Further, a final effect of a shot picture can be improved, and photographing labor costs are reduced.

FIG. 14 is a block diagram of still another photographing device according to an embodiment of the present invention. The device 140 may be applied to a mobile platform, where the mobile platform is communicated with a control terminal and configured to mount the control terminal, and a time-lapse tracking and photographing key is provided in the mobile platform. As shown in FIG. 14, the device 140 may include:
a first obtaining device 1401, configured to obtain a user's operation on the time-lapse tracking and photographing key, to generate a time-lapse tracking and photographing trigger instruction;
a sending apparatus 1402, configured to send the time-lapse tracking and photographing trigger instruction to the control terminal, so that the control terminal generates a time-lapse shot instruction and a tracking instruction;
a second obtaining device 1403, configured to obtain the tracking instruction sent by the control terminal; and
an adjustment device 1404, configured to: while the control terminal performs time-lapse shot on a to-be-tracked target based on the time-lapse shot instruction, adjust a gimbal attitude of the mobile platform based on the tracking instruction, so that the to-be-tracked target is continuously displayed in a picture displayed on a display interface of the control terminal.

As described above, the photographing processing device provided by this embodiment of the present invention obtains the user's operation on the time-lapse tracking and photographing key, to generate the time-lapse tracking and photographing trigger instruction, so that the user can trigger time-lapse tracking and photographing by operating the time-lapse tracking and photographing key on the mobile platform, which can further improve operability for the user to some extent; then sends the time-lapse tracking and photographing trigger instruction to the control terminal, so that the control terminal generates the time-lapse shot instruction and the tracking instruction; and then obtains the tracking instruction sent by the control terminal, and while performing time-lapse shot on the to-be-tracked target based on the time-lapse shot instruction, the control terminal adjusts the gimbal attitude of the mobile platform based on the tracking instruction, so that the to-be-tracked target is continuously displayed in the picture displayed on the display interface of the control terminal. Therefore, time-lapse shot and target tracking can be implemented simultaneously, without requiring the user to manually perform control. Further, a final effect of a shot picture can be improved, and photographing labor costs are reduced.

FIG. 15 is a block diagram of yet another photographing device according to an embodiment of the present invention. The device 150 may be applied to a control terminal, where the control terminal is communicated with a mobile platform, and the control terminal is further mounted on the mobile platform. As shown in FIG. 15, the device 150 may include:
a first obtaining device 1501, configured to obtain a time-lapse tracking and photographing trigger instruction sent by the mobile platform;
a generating apparatus 1502, configured to generate a time-lapse shot instruction and a tracking instruction;
a second obtaining device 1503, configured to obtain a user's operation on a picture displayed on a display interface, and determine the to-be-tracked target based on the user's operation on the picture displayed on the display interface, where the picture includes a picture obtained by the control terminal; and
a control device 1504, configured to perform time-lapse shot on the to-be-tracked target based on the time-lapse shot instruction, and control the mobile platform to adjust a gimbal attitude of the mobile platform based on the tracking instruction to track the to-be-tracked target, so that the to-be-tracked target is continuously displayed on the display interface, so as to implement time-lapse shot and tracking on the to-be-tracked target simultaneously.

Optionally, the time-lapse shot instruction is a time-lapse shot parameter; and the tracking instruction is a control parameter determined based on a target tracking parameter and the to-be-tracked target; and
correspondingly, the generating apparatus 1502 is specifically configured to:
obtain the user's operation of setting the time-lapse shot parameter and the target tracking parameter, to determine the time-lapse shot parameter and the target tracking parameter; and
determine the control parameter based on the target tracking parameter and the to-be-tracked target.

As described above, the photographing processing device provided by this embodiment of the present invention obtains the time-lapse tracking and photographing trigger instruction sent by the mobile platform; then generates the time-lapse shot instruction and the tracking instruction; then obtains the user's operation on the picture displayed on the display interface, and determines the to-be-tracked target based on the user's operation on the picture displayed on the display interface; and finally performs time-lapse shot on the to-be-tracked target based on the time-lapse shot instruction, and controls the mobile platform to adjust the gimbal attitude of the mobile platform based on the tracking instruction, so as to implement time-lapse shot and tracking on the to-be-tracked target simultaneously. Therefore, time-lapse shot and target tracking can be implemented simultaneously, without requiring the user to manually perform control. Further, a final effect of a shot picture can be improved, and photographing labor costs are reduced.

FIG. 16 is a block diagram of another photographing system according to an embodiment of the present invention. As shown in FIG. 16, the system 160 may include:
a mobile platform 1601 and a control terminal 1602, where the mobile platform 1601 is communicated with the control terminal 1602 and configured to mount the control terminal 1602, and a time-lapse tracking and photographing key is provided in the mobile platform 1601;
the mobile platform 1601 is configured to obtain a user's operation on the time-lapse tracking and photographing key, to generate a time-lapse tracking and photographing trigger instruction;
the mobile platform 1601 is configured to send the time-lapse shot trigger instruction to the control terminal 1602;
the control terminal 1602 is configured to obtain the time-lapse shot trigger instruction sent by the mobile platform 1601;
the control terminal 1602 is configured to generate a time-lapse shot instruction and a tracking instruction, where the time-lapse shot instruction is used to control the control terminal 1602 to perform time-lapse shot, and the tracking instruction is used to control the mobile platform 1601 to track a to-be-tracked target;
the control terminal 1602 is configured to obtain the user's operation on a picture displayed on a display interface, and determine the to-be-tracked target based on the user's operation on the picture displayed on the display interface, where the picture includes a picture obtained by the control terminal 1602;
the control terminal 1602 is configured to perform time-lapse shot on the to-be-tracked target based on the time-lapse shot instruction, and control the mobile platform 1601 to adjust a gimbal attitude of the mobile platform 1601 based on the tracking instruction;
the mobile platform 1601 is configured to obtain the tracking instruction sent by the control terminal 1602; and
the mobile platform 1601 is configured to: while the control terminal 1602 performs time-lapse shot on the to-be-tracked target based on the time-lapse shot instruction, adjust the gimbal attitude of the mobile platform 1601 based on the tracking instruction, so that the to-be-tracked target is continuously displayed in the picture displayed on the display interface of the control terminal.

As described above, in the photographing processing system provided by this embodiment of the present invention, the mobile platform generates the time-lapse tracking and photographing trigger instruction based on the user's operation on the time-lapse tracking and photographing key, and sends the time-lapse tracking and photographing trigger instruction to the control terminal; and the control terminal obtains the time-lapse tracking and photographing trigger instruction sent by the mobile platform, then generates the time-lapse shot instruction and the tracking instruction, then obtains the user's operation on the picture displayed on the display interface, and determines the to-be-tracked target based on the user's operation on the picture displayed on the display interface, and finally performs time-lapse shot on the to-be-tracked target based on the time-lapse shot instruction, and controls the mobile platform to adjust the gimbal attitude of the mobile platform based on the tracking instruction, so as to implement time-lapse shot and tracking on the to-be-tracked target simultaneously. Therefore, time-lapse shot and target tracking can be implemented simultaneously, without requiring the user to manually perform control. Further, a final effect of a shot picture can be improved, and photographing labor costs are reduced.

FIG. 17 is a block diagram of yet another photographing device according to an embodiment of the present invention. The device may be applied to a mobile platform, where the mobile platform is configured with a display interface and further configured with a photographing apparatus, and the mobile platform is communicated with the photographing apparatus. As shown in FIG. 17, the device 170 may include:
a first obtaining device 1701, configured to obtain a user's operation on a time-lapse shot and tracking icon on the display interface, to generate a time-lapse shot instruction and a tracking instruction, where the time-lapse shot instruction is used to control the photographing apparatus to perform time-lapse shot, and the tracking instruction is used to control the mobile platform to track a to-be-tracked target for photographing;
a second obtaining device 1702, configured to obtain the user's operation on a picture displayed on the display interface, and determine the to-be-tracked target based on the user's operation on the picture displayed on the display interface; and
an adjustment device 1703, configured to control the photographing apparatus based on the time-lapse shot instruction to perform time-lapse shot on the to-be-tracked target, and adjust a gimbal attitude of the mobile platform based on the tracking instruction, so that the to-be-tracked target is continuously displayed in the picture displayed on the display interface, so as to implement time-lapse shot and tracking on the to-be-tracked target simultaneously.

As described above, the photographing processing device provided by this embodiment of the present invention obtains the user's operation on the time-lapse shot and tracking icon on the display interface, to generate the time-lapse shot instruction and the tracking instruction; then obtains the user's operation on the picture displayed on the display interface, and determines the to-be-tracked target based on the user's operation on the picture displayed on the display interface; and finally controls the photographing apparatus based on the time-lapse shot instruction to perform time-lapse shot on the to-be-tracked target, and adjusts the gimbal attitude of the mobile platform based on the tracking instruction, so as to implement time-lapse shot and tracking on the to-be-tracked target simultaneously. Therefore, time-lapse shot and target tracking can be implemented simultaneously, without requiring the user to manually perform control. Further, a final effect of a shot picture can be improved, and photographing labor costs are reduced.

FIG. 18 is a block diagram of yet another photographing device according to an embodiment of the present invention, where the device 180 may be applied to a control terminal. As shown in FIG. 18, the device 180 may include:
an obtaining apparatus 1801, configured to obtain a time-lapse shot parameter and a target tracking parameter, and determine a to-be-tracked target; and
a tracking and photographing apparatus 1802, configured to photograph the to-be-tracked target based on the time-lapse shot parameter; and send a control instruction to a mobile platform based on the target tracking parameter and the to-be-tracked target, to control the mobile platform to adjust a gimbal attitude of the mobile platform based on the tracking instruction, so that the to-be-tracked target is continuously displayed in a picture displayed on a display interface of the control terminal, so as to implement time-lapse shot and tracking on the to-be-tracked target simultaneously.

Optionally, the time-lapse shot parameter includes at least one of a photographing interval duration and a total photographing duration; and/or
the target tracking parameter includes at least one of a target tracking speed and a target display position.

Optionally, the obtaining apparatus 1801 is specifically configured to:
display a recommended photographing parameter and a recommended tracking parameter; and if a user's first confirmation operation is obtained, determine the recommended photographing parameter and the recommended tracking parameter respectively as the time-lapse shot parameter and the target tracking parameter; or
obtain the time-lapse shot parameter and the target tracking parameter that are independently set by a user.

Optionally, the obtaining apparatus 1801 is further specifically configured to:
display a parameter input interface; and obtain a photographing parameter input by the user by using the parameter input interface, to obtain the time-lapse shot parameter, and obtain a tracking parameter input by the user by using the parameter input interface, to obtain the target tracking parameter; or
display a plurality of candidate photographing parameters and a plurality of candidate tracking parameters; obtain the user's operation of making a selection from the plurality of candidate photographing parameters, and operation of making a selection from the plurality of candidate tracking parameters; and determine, based on the user's operation of making the selection from the plurality of candidate photographing parameters and operation of making the selection from the plurality of candidate tracking parameters, a candidate photographing parameter and a candidate tracking parameter that are selected by the user, as the time-lapse shot parameter and the target tracking parameter respectively; or
obtain the time-lapse shot parameter and the target tracking speed that are sent by the mobile platform, where the time-lapse shot parameter and the target tracking speed are determined by the mobile platform based on the user's operation on a specified key in the mobile platform.

Optionally, the target tracking parameter includes the target tracking speed and the target display position; and
the obtaining apparatus 1801 is further specifically configured to:
obtain a tracking speed input by the user in a tracking speed area in the parameter input interface, to obtain the target tracking speed, and obtain the user's operation on a position setting icon in the parameter input interface, to generate a position setting instruction, where the position setting instruction carries display position information; and
determine a display position indicated by the display position information as the target display position.

Optionally, the obtaining apparatus 1801 is further specifically configured to:
display a selection box in the picture displayed on the display interface; and
obtain the user's second confirmation operation on the selection box, and determine the to-be-tracked target based on the second confirmation operation.

Optionally, the obtaining apparatus 1801 is further specifically configured to:
if there is one selection box, obtain the user's operation of moving the selection box, to generate a target selection box, and determine the to-be-tracked target based on the target selection box; or
if there are a plurality of selection boxes, obtain the user's operation of making a selection from the plurality of selection boxes, to determine a target selection box, and determine the to-be-tracked target based on the target selection box.

Optionally, the obtaining apparatus 1801 is further specifically configured to:
display a selection box for each mobile object in the picture.

Optionally, the obtaining apparatus 1801 is further specifically configured to:
obtain the user's operation of switching the selection box to determine a target selection box; and
determine the to-be-tracked target based on the target selection box.

Optionally, the obtaining apparatus 1801 is further specifically configured to:
determine a mobile object corresponding to the target selection box in the picture as the to-be-tracked target.

As described above, the photographing processing device provided by this embodiment of the present invention obtains the time-lapse shot parameter and the target tracking parameter, and determines the to-be-tracked target; photographs the to-be-tracked target based on the time-lapse shot parameter; and sends the control instruction to the mobile platform based on the target tracking parameter and the to-be-tracked target, to control the mobile platform to adjust the gimbal attitude of the mobile platform based on the tracking instruction, so as to implement time-lapse shot and tracking on the to-be-tracked target simultaneously. Therefore, time-lapse shot and target tracking can be implemented simultaneously, without requiring the user to manually perform control. Further, a final effect of a shot picture can be improved, and photographing labor costs are reduced.

FIG. 19 is a block diagram of yet another photographing device according to an embodiment of the present invention, where the device 190 may be applied to a mobile platform. As shown in FIG. 19, the device 190 may include:
an obtaining apparatus 1901, configured to: while a control terminal photographs a to-be-tracked target based on a time-lapse shot parameter, obtain a control instruction sent by the control terminal, where the control instruction is sent by the control terminal based on a target tracking parameter and the to-be-tracked target; and
an adjustment device 1902, configured to adjust a gimbal attitude of the mobile platform based on the control instruction, so that the to-be-tracked target is continuously displayed in a picture displayed on a display interface of the control terminal, to implement time-lapse shot and tracking on the to-be-tracked target simultaneously.

Optionally, the control instruction includes a target angular speed; and
the adjustment device 1901 is specifically configured to:
adjust the gimbal attitude of the mobile platform based on the target angular speed to adjust a posture of a photographing apparatus.

Optionally, the control instruction includes the target tracking parameter and a result of determining the to-be-tracked target, and the result of determining the to-be-tracked target is used to indicate the to-be-tracked target; and
the adjustment device 1901 is specifically configured to:
at each intervals of a preset interval duration, calculate a position change of the to-be-tracked target in the preset interval duration;
determine a target angular speed based on the position change and the target tracking parameter; and
adjust the gimbal attitude of the mobile platform based on the target angular speed to adjust a posture of a photographing apparatus.

As described above, while the control terminal photographs the to-be-tracked target based on the time-lapse shot parameter, the photographing processing device provided by this embodiment of the present invention obtains the control instruction sent by the control terminal, and adjusts the gimbal attitude of the mobile platform based on the control instruction, so that the to-be-tracked target is continuously displayed in the picture displayed on the display interface of the control terminal, so as to implement time-lapse shot and tracking on the to-be-tracked target simultaneously. Therefore, time-lapse shot and target tracking can be implemented simultaneously, without requiring the user to manually perform control. Further, a final effect of a shot picture can be improved, and photographing labor costs are reduced.

FIG. 20 is a block diagram of still another photographing system according to an embodiment of the present invention. As shown in FIG. 20, the system 200 may include:
a mobile platform 2001 and a control terminal 2002, where the control terminal 2002 is communicated with the mobile platform 2001;
the control terminal 2002 is configured to obtain a time-lapse shot parameter and a target tracking parameter, and determine a to-be-tracked target;
the control terminal 2002 is configured to photograph the to-be-tracked target based on the time-lapse shot parameter, and send a control instruction to the mobile platform 2001 based on the target tracking parameter and the to-be-tracked target;
the mobile platform 2001 is configured to obtain the control instruction sent by the control terminal 2002; and
the mobile platform 2001 is configured to: while the control terminal 2002 photographs the to-be-tracked target based on the time-lapse shot parameter, adjust a gimbal attitude of the mobile platform 2001 based on the control instruction, so that the to-be-tracked target is continuously displayed in a picture displayed on a display interface of the control terminal 2002, so as to implement time-lapse shot and tracking on the to-be-tracked target simultaneously.

As described above, in the photographing processing system provided by this embodiment of the present invention, the control terminal obtains the time-lapse shot parameter and the target tracking parameter, determines the to-be-tracked target, photographs the to-be-tracked target based on the time-lapse shot parameter, and sends the control instruction to the mobile platform based on the target tracking parameter and the to-be-tracked target; and while the control terminal photographs the to-be-tracked target based on the time-lapse shot parameter, the mobile platform adjusts the gimbal attitude of the mobile platform based on the control instruction, so as to implement time-lapse shot and tracking on the to-be-tracked target simultaneously. Therefore, time-lapse shot and target tracking can be implemented simultaneously, without requiring the user to manually perform control. Further, a final effect of a shot picture can be improved, and photographing labor costs are reduced.

An embodiment of the present invention further provides a computer-readable storage medium, where the computer-readable storage medium stores a computer program, and when the computer program is executed by a processor, steps of the foregoing photographing method are implemented.

FIG. 21 is a schematic diagram of a hardware structure of a control terminal for implementing each embodiment of the present invention. The control terminal 2100 includes but is not limited to components such as a radio frequency unit 2101, a network apparatus 2102, an audio output unit 2103, an input unit 2104, a sensor 2105, a display unit 2106, a user input unit 2107, an interface unit 2108, a memory 2109, a processor 2110, and a power supply 2111. Persons skilled in the art may understand that the structure of the control terminal shown in FIG. 21 does not constitute a limitation on the control terminal. A quantity of components included in the control terminal may be greater or less than that shown in the figure, or some components are combined, or component arrangements are different. In this embodiment of the present invention, the control terminal includes but is not limited to a mobile phone, a tablet computer, a notebook computer, a palmtop computer, a vehicle-mounted terminal, a wearable device, a pedometer, or the like.

It should be understood that in this embodiment of the present invention, the radio frequency unit 2101 may be configured to obtain and send signals in an information reception or transmission process or a call. Specifically, after obtaining downlink data from a base station, the radio frequency unit 2101 sends the downlink data to the processor 2110 for processing, and in addition, sends uplink data to the base station. Generally, the radio frequency unit 2101 includes but is not limited to an antenna, at least one amplifier, a transceiver, a coupler, a low noise amplifier, a duplexer, and the like. In addition, the radio frequency unit 2101 may further communicate with a network and another device through a wireless communications system.

The control terminal provides wireless broadband Internet access for a user by using the network apparatus 2102, for example, helps the user send and receive e-mails, browse web pages, and access streaming media.

The audio output unit 2103 may convert audio data obtained by the radio frequency unit 2101 or the network apparatus 2102 or stored in the memory 2109 into an audio signal, and output the audio signal as a sound. Furthermore, the audio output unit 2103 may also provide audio output (for example, a sound for obtaining a call signal or a sound for obtaining a message) related to a specific function performed by the control terminal 2100. The audio output unit 2103 includes a speaker, a buzzer, a telephone receiver, and the like.

The input unit 2104 is configured to obtain an audio or video signal. The input unit 2104 may include a graphics processing unit (GPU) 21041 and a microphone 21042. The graphics processing unit 21041 processes image data of a still picture or a video obtained by an image capture control terminal (for example, a camera) in an image capture mode or a video capture mode. A processed image frame may be displayed on the display unit 21021. An image frame processed by the graphics processing unit 21041 may be stored in the memory 2109 (or another storage medium) or sent by the radio frequency unit 2101 or the network apparatus 2102. The microphone 21042 may obtain a sound and may process the sound into audio data. The processed audio data may be converted, in a telephone call mode, into a format that can be sent to a mobile communication base station through the radio frequency unit 2101, for outputting.

The control terminal 2100 further includes at least one sensor 2105, for example, an optical sensor, a motion sensor, and another sensor. Specifically, the optical sensor includes an ambient light sensor and a proximity sensor. The ambient light sensor may adjust luminance of a display panel 21061 according to the brightness of ambient light, and the proximity sensor may turn off the display panel 21061 and/or backlight when the control terminal 2100 moves close to an ear. As a type of motion sensor, an accelerometer sensor can detect magnitudes of accelerations in all directions (usually three axes), can detect a magnitude and a direction of gravity when the control terminal is in a stationary state, and can be applied to control terminal posture recognition (such as screen switching between portrait and landscape, games, and magnetometer posture calibration), functions related to vibration recognition (such as pedometer and tapping), and the like. The sensor 2105 may further include a fingerprint sensor, a pressure sensor, an iris sensor, a molecular sensor, a gyroscope, a barometer, a hygrometer, a thermometer, an infrared sensor, and the like. Details will not be described herein.

The display unit 2106 is configured to display information input by the user or information provided for the user. The display unit 2106 may include the display panel 21061. The display panel 21061 may be a form of a liquid crystal display (LCD), an organic light-emitting diode (OLED), or the like.

The user input unit 2107 may be configured to obtain input digit or character information, and generate a key signal input related to a user setting and function control of the control terminal. Specifically, the user input unit 2107 includes a touch panel 21071 and another input device(s) 21072. The touch panel 21071, also referred to as a touchscreen, may capture a touch operation performed by the user on or near the touch panel (for example, an operation performed by the user on the touch panel 21071 or near the touch panel 21071 by using any appropriate object or accessory such as a finger or a stylus). The touch panel 21071 may include two parts: a touch detection control terminal and a touch controller. The touch detection control terminal detects a touch direction of the user, detects a signal carried by a touch operation, and transmits the signal to the touch controller. The touch controller obtains touch information from the touch detection control terminal, converts the touch information into point coordinates, sends the point coordinates to the processor 2110, and obtains and executes a command sent by the processor 2110. In addition, the touch panel 21071 may be implemented in different forms, for example, a resistive, capacitive, infrared, or surface acoustic wave touch panel. The user input unit 2107 may further include another input device(s) 21072 in addition to the touch panel 21071. Specifically, the another input device(s) 21072 may include but is not limited to a physical keyboard, a function key (such as a volume control key or a power on/off key), a trackball, a mouse, a joystick, and the like. Details will not be described herein.

Further, the touch panel 21071 may cover the display panel 21061. After the touch panel 21071 detects a touch operation on or near the touch panel, the touch panel 21071 transmits the touch operation to the processor 2110 to determine a type of a touch event. Then the processor 2110 provides a corresponding visual output on the display panel 21061 based on the type of the touch event. Although the touch panel 21071 and the display panel 21061 are used as two independent components to implement input and output functions of the control terminal, the touch panel 21071 and the display panel 21061 may be integrated to implement the input and output functions of the control terminal in some embodiments. This is not specifically limited herein.

The interface unit 2108 is an interface between an external control terminal and the control terminal 2100. For example, the external control terminal may include a wired or wireless headphone port, an external power (or battery charger) port, a wired or wireless data port, a memory card port, a port for connecting a control terminal having an identification device, an audio input/output (I/O) port, a video I/O port, an earphone port, and the like. The interface unit 2108 may be configured to obtain an input (for example, data information or power) from an external control terminal, and transmit the obtained input to one or more components in the control terminal 2100, or may be configured to transmit data between the control terminal 2100 and an external control terminal.

The memory 2109 may be configured to store a software program and various data. The memory 2109 may mainly include a program storage area and a data storage area. The program storage area may store an operating system, an application program required for at least one function (such as a sound play function and an image play function), and the like. The data storage area may store data created based on the use of a mobile phone (such as audio data and a phone book), and the like. In addition, the memory 2109 may include a high-speed random access memory, or may include a non-volatile memory, for example, at least one magnetic disk storage device, a flash memory, or other volatile solid-state storage devices.

The processor 2110 is a control center of the control terminal. The processor 2110 uses various interfaces and lines to connect all parts of the entire control terminal, and executes various functions and data processing of the control terminal by running or executing the software program and/or apparatus stored in the memory 2109 and invoking data stored in the memory 2109, thereby performing overall monitoring on the control terminal. The processor 2110 may include one or more processing units. Preferably, the processor 2110 may integrate an application processor and a modem processor. The application processor mainly processes the operating system, a user interface, an application program, and the like. The modem processor mainly processes wireless communication. It may be understood that the modem processor may alternatively not be integrated into the processor 2110.

The control terminal 2100 may further include the power source 2111 (such as a battery) supplying power to each component. Preferably, the power source 2111 may be logically connected to the processor 2110 through a power management system, so that functions such as charge and discharge management and power consumption management are implemented by using the power management system.

In addition, the control terminal 2100 includes some functional devices that are not illustrated. Details will not be described herein.

The described apparatus embodiments are merely exemplary. The units described as separate parts may or may not be physically separate, and parts displayed as units may or may not be physical units, may be located in one position, or may be distributed on a plurality of network elements. Some or all of the modules may be selected according to actual needs to achieve the objective of the solution of this embodiment. Persons of ordinary skill in the art may understand and implement the solution of this embodiment without creative efforts.

Various component embodiments of the present invention may be implemented by hardware, or implemented by software modules running on one or more processors, or implemented by a combination thereof. Persons skilled in the art should understand that, in practice, a microprocessor or a digital signal processor (DSP) may be used to implement some or all functions of some or all components of computation processing devices in the embodiments of the present invention. The present invention may be further implemented as some or all device or apparatus programs (for example, computer programs and computer program products) configured to perform the method described herein. Such programs for implementing the present invention may be stored in a computer-readable medium, or may have one or a plurality of signal forms. Such signals may be downloaded from an Internet site, or provided on carrier signals, or provided in any other form. In this specification, "one embodiment", "an embodiment", or "one or more embodiments" means that a specific feature, structure, or characteristic described with reference to the embodiment(s) is included in at least one embodiment of the present invention. In addition, it should be noted that all examples of the term "in one embodiment" do not necessarily refer to a same embodiment.

Although plenty of details are described in the specification provided herein, it can be understood that the embodiments of the present invention can be practiced without these specific details. In some examples, well-known methods, structures, and technologies are not shown in detail to avoid a vague understanding about the specification.

Any reference sign placed between parentheses in a claim shall not be construed as a limitation on the claim. The word "comprising" does not exclude presence of elements or steps not listed in the claim. The word "a" or "an" preceding an element does not exclude presence of a plurality of such elements. The present invention can be implemented by hardware including several different elements, and by a suitably programmed computer. In the apparatus claim enumerating several apparatuses, several of these apparatuses can be embodied by a same hardware item. Use of the words "first", "second", "third", and the like does not represent any sequence. These terms may be interpreted as names.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A photographing method, **characterized in that** the method is applied to a control terminal, the control terminal is used for communicating to a mobile platform, a time-lapse shot and tracking icon is provided on a display interface of the control terminal, the method comprises:
displaying the time-lapse shot and tracking icon, where the time-lapse shot and tracking icon is used for indicating a time-lapse shot instruction and a tracking instruction, the time-lapse shot instruction is used for controlling the control terminal to perform time-lapse shot, and the tracking instruction is used for controlling the mobile platform to track a to-be-tracked target;
obtaining an operation of a user to the time-lapse shot and tracking icon, to generate the time-lapse shot instruction and the tracking instruction;
obtaining an operation of the user on a picture displayed on the display interface, and determining the to-be-tracked target based on the operation of the user on the picture displayed on the display interface, where the picture includes a picture obtained by the control terminal; and
controlling the mobile platform to adjust a gimbal attitude of the mobile platform based on the tracking instruction to track the to-be-tracked target, so that the to-be-tracked target is continuously displayed on the display interface, and performing time-lapse shot on the to-be-tracked target based on the time-lapse shot instruction, to implement time-lapse shot and tracking on the to-be-tracked target simultaneously.

2. The method according to claim 1, **characterized in that** the obtaining of the operation of the user to the time-lapse shot and tracking icon includes:
obtaining an operation of the user on setting a time-lapse shot parameter and a target tracking parameter.

3. The method according to claim 2, **characterized in that** the obtaining of the operation of the user on setting the time-lapse shot parameter and the target tracking parameter includes:
if a preset operation of the user to the time-lapse shot and tracking icon is obtained, then obtaining the operation of the user on setting the time-lapse shot parameter and the target tracking parameter.

4. The method according to claim 2, **characterized in that** the time-lapse shot parameter includes at least one of a photographing interval duration, or a total photographing duration; and/or
the target tracking parameter includes at least one of a target tracking speed, or a target display position.

5. The method according to claim 2, **characterized in that** the obtaining of the operation of the user on setting the time-lapse shot parameter and the target tracking parameter includes:
displaying a recommended photographing parameter and a recommended tracking parameter; and if a first confirmation operation of the user is obtained, determining the recommended photographing parameter and the recommended tracking parameter respectively as the time-lapse shot parameter and the target tracking parameter; or
obtaining the time-lapse shot parameter and the target tracking parameter that are independently set by the user.

6. The method according to claim 5, **characterized in that** the obtaining of the time-lapse shot parameter and the target tracking parameter that are independently set by the user includes:
displaying a parameter input interface; and obtaining a photographing parameter input by the user through the parameter input interface to obtain the time-lapse shot parameter, and obtaining a tracking parameter input by the user through the parameter input interface to obtain the target tracking parameter; or
displaying a plurality of candidate photographing parameters and a plurality of candidate tracking parameters; obtaining an operation of the user on making a selection from the plurality of candidate photographing parameters, and an operation of the user on making a selection from the plurality of candidate tracking parameters; and determining, based on the operation on making the selection from the plurality of candidate photographing parameters and the operation on making the selection from the plurality of candidate tracking parameters, a candidate photographing parameter and a candidate tracking parameter that are selected by the user, as the time-lapse shot parameter and the target tracking parameter respectively; or
obtaining the time-lapse shot parameter and a target tracking speed that are sent by the mobile platform, wherein the time-lapse shot parameter and the target tracking speed are determined by the mobile platform based on an operation of the user to a specified key on the mobile platform.

7. The method according to claim 6, **characterized in that** the target tracking parameter includes the target tracking speed and a target display position; and
the obtaining of the tracking parameter input by the user through the parameter input interface to obtain the target tracking parameter includes:
obtaining a tracking speed input by the user in a tracking speed area on the parameter input interface, to obtain the target tracking speed, and obtaining an operation of the user on a position setting icon on the parameter input interface, to generate a position setting instruction, wherein the position setting instruction carries display position information; and
determining a display position indicated by the display position information as the target display position.

8. The method according to claim 4, **characterized in that** the time-lapse shot instruction includes the time-lapse shot parameter; and
the performing of the time-lapse shot on the to-be-tracked target based on the time-lapse shot instruction includes:
photographing the to-be-tracked target at each interval of the photographing interval duration, until a photographing duration reaches the total photographing duration; or
sending the time-lapse shot parameter to the mobile platform, so that the mobile platform performs the operation of photographing the to-be-tracked target at every interval of the photographing interval duration, until the photographing duration reaches the total photographing duration.

9. The method according to claim 2, **characterized in that** the tracking instruction includes a control parameter determined based on the target tracking parameter and the to-be-tracked target; and
the controlling of the mobile platform to adjust the gimbal attitude of the mobile platform based on the tracking instruction includes:
sending the tracking instruction carrying the control parameter to the mobile platform, to control the mobile platform to adjust the gimbal attitude of the mobile platform based on the tracking instruction.

10. The method according to claim 9, **characterized in that**
the sending of the tracking instruction carrying the control parameter to the mobile platform includes:
at each interval of a preset interval duration, calculating a position change of the to-be-tracked target in the preset interval duration; and determining a target angular speed based on the position change and the target tracking parameter; and
using the target angular speed as the control parameter, and sending the tracking instruction carrying the target angular speed to the mobile platform.

11. The method according to claim 9, **characterized in that** the sending of the tracking instruction carrying the control parameter to the mobile platform includes:
using the target tracking parameter and a result of determining the to-be-tracked target as the control parameter, and sending the tracking instruction carrying the target tracking parameter and the result of determining the to-be-tracked target to the mobile platform, wherein the result of determining the to-be-tracked target is used for indicating the to-be-tracked target.

12. The method according to claim 1, **characterized in that** the method further comprises:
if an ending instruction is obtained, stopping the operation of performing time-lapse shot based on the time-lapse shot instruction, and stopping the operation of controlling the mobile platform to adjust the gimbal attitude of the mobile platform based on the tracking instruction and the to-be-tracked target to track the to-be-tracked target.

13. The method according to claim 12, further comprising:
an ending key is provided on the display interface of the control terminal for obtaining an operation of the user on the ending key to obtain the ending instruction; or
an ending key is provided on the mobile platform for obtaining an operation of the user on the ending key on the mobile platform to obtain the ending instruction.

14. The method according to claim 4, further comprising:
if a photographing duration of the time-lapse shot reaches the total photographing duration, then stopping the operation of performing time-lapse shot based on the time-lapse shot instruction, and stopping the operation of controlling the mobile platform to adjust the gimbal attitude of the mobile platform based on the tracking instruction and the to-be-tracked target to track the to-be-tracked target.

15. The method according to claim 1, **characterized in that** the obtaining of the operation of the user on the picture displayed on the display interface and the determining of the to-be-tracked target based on the operation of the user on the picture displayed on the display interface include:
displaying a selection box in the picture displayed on the display interface; and
obtaining a second confirmation operation of the user on the selection box, and determining the to-be-tracked target based on the second confirmation operation.

16. The method according to claim 15, **characterized in that** the selection box includes a dot, a line, or a polygonal box.

17. The method according to claim 15, **characterized in that** the obtaining of the second confirmation operation of the user on the selection box and the determining of the to-be-tracked target based on the second confirmation operation include:
if there is one selection box, then obtaining an operation of the user on moving the selection box to generate a target selection box, and determining the to-be-tracked target based on the target selection box; or
if there are a plurality of selection boxes, then obtaining an operation of the user on selecting from the plurality of selection boxes to determine a target selection box, and determining the to-be-tracked target based on the target selection box.

18. The method according to claim 15, **characterized in that** the displaying of the selection box in the picture displayed on the display interface includes:
displaying the selection box for each mobile object in the picture.

19. The method according to claim 18, **characterized in that** the obtaining of the second confirmation operation of the user on the selection box, and the determining of the to-be-tracked target based on the second confirmation operation includes:
obtaining an operation of the user on switching the selection box to determine a target selection box; and
determining the to-be-tracked target based on the target selection box.

20. The method according to claim 17 or 19, **characterized in that** the determining of the to-be-tracked target based on the target selection box includes:
determining a mobile object corresponding to the target selection box in the picture as the to-be-tracked target.

21. The method according to claim 17, further comprising:
obtaining a third confirmation operation of the user on the target selection box displayed on the display interface of the control terminal, to confirm the target selection box; or
obtaining a third confirmation operation of the user to a selection key on the mobile platform, to confirm the target selection box.

22. The method according to claim 21, **characterized in that** the third confirmation operation includes: touching and holding, tapping, or double-tapping.

23. The method according to claim 1, **characterized in that** the control terminal includes a photographing apparatus, and the performing of the time-lapse shot on the to-be-tracked target based on the time-lapse shot instruction includes:
controlling the photographing apparatus based on the time-lapse shot instruction to perform the time-lapse shot on the to-be-tracked target.

24. The method according to claim 1, **characterized in that** the control terminal is communicated with a photographing apparatus, and the performing of the time-lapse shot on the to-be-tracked target based on the time-lapse shot instruction includes:
sending the time-lapse shot instruction to the photographing apparatus, to control the photographing apparatus to perform the time-lapse shot on the to-be-tracked target based on the time-lapse shot instruction.

25. A photographing method, **characterized in that** the method is applied to a mobile platform, the mobile platform is communicated with a control terminal, the method comprises:
obtaining a tracking instruction sent by the control terminal; and
while the control terminal performs time-lapse shot on a to-be-tracked target based on a time-lapse shot instruction, adjusting a gimbal attitude of the mobile platform based on the tracking instruction, so that the to-be-tracked target is continuously displayed in a picture displayed on a display interface of the control terminal.

26. The method according to claim 25, **characterized in that** the tracking instruction carries a target angular speed; and
the adjusting of the gimbal attitude of the mobile platform based on the tracking instruction includes:
adjusting the gimbal attitude of the mobile platform based on the target angular speed to adjust a posture of a photographing apparatus.

27. The method according to claim 25, **characterized in that** the tracking instruction carries a target tracking parameter and a result of determining the to-be-tracked target, and the result of determining the to-be-tracked target is used for indicating the to-be-tracked target; and
the adjusting of the gimbal attitude of the mobile platform based on the tracking instruction includes:
at each interval of a preset interval duration, calculating a position change of the to-be-tracked target in the preset interval duration;
determining a target angular speed based on the position change and the target tracking parameter; and
adjusting the gimbal attitude of the mobile platform based on the target angular speed to adjust a posture of a photographing apparatus.

28. The method according to any one of claims 25 to 27, **characterized in that** the control terminal includes the photographing apparatus, or the control terminal is communicated with the photographing apparatus.

29. The method according to claim 25, **characterized in that** a selection key is provided on the mobile platform, the selection key is used for confirming the to-be-tracked target, and the method further comprises:
obtaining an operation of a user to the selection key; and
confirming the to-be-tracked target based on the operation of the user to the selection key.

30. The method according to claim 29, **characterized in that** after confirming the to-be-tracked target, controlling the mobile platform to adjust the gimbal attitude of the mobile platform based on the tracking instruction, so that the to-be-tracked target is continuously displayed in a picture captured by a photographing apparatus.

31. A photographing method, **characterized in that** the method is applied to a system comprising a mobile platform and a control terminal, wherein the control terminal is communicated with the mobile platform, a time-lapse shot and tracking icon is provided on a display interface of the control terminal, and the method comprises:
displaying, by the control terminal, the time-lapse shot and tracking icon;
obtaining, by the control terminal, an operation of a user to the time-lapse shot and tracking icon, to generate the time-lapse photographing instruction and the tracking instruction;
obtaining, by the control terminal, an operation of the user on a picture displayed on the display interface, and determining the to-be-tracked target based on the user's operation on the picture displayed on the display interface, wherein the picture comprises a picture obtained by the control terminal;
controlling, by the control terminal, the mobile platform to adjust a gimbal attitude of the mobile platform based on the tracking instruction, and performing time-lapse shot on the to-be-tracked target based on the time-lapse shot instruction;
obtaining, by the mobile platform, the tracking instruction sent by the control terminal; and
while the control terminal performs time-lapse shot on the to-be-tracked target based on the time-lapse shot instruction, adjusting, by the mobile platform, the gimbal attitude of the mobile platform based on the tracking instruction, so that the to-be-tracked target is continuously displayed in the picture displayed on the display interface of the control terminal.

32. A photographing method, **characterized in that** the method is applied to a mobile platform, the mobile platform is communicated with a control terminal and configured to mount the control terminal, a time-lapse tracking and photographing key is provided on the mobile platform, and the method comprises:
obtaining an operation of a user to the time-lapse tracking and photographing key, to generate a time-lapse tracking and photographing trigger instruction;
sending the time-lapse tracking and photographing trigger instruction to the control terminal, so that the control terminal generates a time-lapse shot instruction and a tracking instruction;
obtaining the tracking instruction sent by the control terminal; and
while the control terminal performs time-lapse shot on a to-be-tracked target based on the time-lapse shot instruction, adjusting a gimbal attitude of the mobile platform based on the tracking instruction, so that the to-be-tracked target is continuously displayed in a picture displayed on a display interface of the control terminal.

33. A photographing method, **characterized in that** the method is applied to a control terminal, the control terminal is communicated with a mobile platform, the control terminal is further configured to be mounted on the mobile platform, and the method comprises:
obtaining a time-lapse tracking and photographing trigger instruction sent by the mobile platform;
generating a time-lapse shot instruction and a tracking instruction;
obtaining an operation of a user on a picture displayed on a display interface, and determining the to-be-tracked target based on the operation of the user on the picture displayed on the display interface, wherein the picture includes a picture obtained by the control terminal; and
performing time-lapse shot on the to-be-tracked target based on the time-lapse shot instruction, and controlling the mobile platform to adjust a gimbal attitude of the mobile platform based on the tracking instruction to track the to-be-tracked target, so that the to-be-tracked target is continuously displayed on the display interface, so as to implement time-lapse shot and tracking on the to-be-tracked target simultaneously.

34. The method according to claim 33, **characterized in that** the time-lapse shot instruction is a time-lapse shot parameter; and the tracking instruction is a control parameter determined based on a target tracking parameter and the to-be-tracked target; and
correspondingly, the generating of the time-lapse shot instruction and the tracking instruction includes:
obtaining an operation of the user on setting the time-lapse shot parameter and the target tracking parameter, to determine the time-lapse shot parameter and the target tracking parameter; and
determining the control parameter based on the target tracking parameter and the to-be-tracked target.

35. A photographing method, **characterized in that** the method is applied to a system including a mobile platform and a control terminal, the mobile platform is communicated with the control terminal and configured to mount the control terminal, a time-lapse tracking and photographing key is provided in the mobile platform, and the method comprises:
obtaining, by the mobile platform, an operation of a user to the time-lapse tracking and photographing key, to generate a time-lapse tracking and photographing trigger instruction;
sending, by the mobile platform, the time-lapse shot trigger instruction to the control terminal;
obtaining, by the control terminal, the time-lapse shot trigger instruction sent by the mobile platform;
generating, by the control terminal, a time-lapse shot instruction and a tracking instruction, wherein the time-lapse shot instruction is used for controlling the control terminal to perform time-lapse shot, and the tracking instruction is used for controlling the mobile platform to track a to-be-tracked target;
obtaining, by the control terminal, an operation of the user on a picture displayed on a display interface, and determining the to-be-tracked target based on the operation of the user on the picture displayed on the display interface, wherein the picture includes a picture obtained by the control terminal;
performing, by the control terminal, time-lapse shot on the to-be-tracked target based on the time-lapse shot instruction, and controlling the mobile platform to adjust a gimbal attitude of the mobile platform based on the tracking instruction;
obtaining, by the mobile platform, the tracking instruction sent by the control terminal; and
while the control terminal performs time-lapse shot on the to-be-tracked target based on the time-lapse shot instruction, adjusting, by the mobile platform, the gimbal attitude of the mobile platform based on the tracking instruction, so that the to-be-tracked target is continuously displayed in the picture displayed on the display interface of the control terminal.

36. A photographing method, **characterized in that** the method is applied to a mobile platform, the mobile platform is provided with a display interface and further provided with a photographing apparatus, the mobile platform is communicated with the photographing apparatus, and the method comprises:
obtaining an operation of a user on a time-lapse shot and tracking icon on the display interface, to generate a time-lapse shot instruction and a tracking instruction, wherein the time-lapse shot instruction is used for controlling the photographing apparatus to perform time-lapse shot, and the tracking instruction is used for controlling the mobile platform to track a to-be-tracked target for photographing;
obtaining the operation of the user on a picture displayed on the display interface, and determining the to-be-tracked target based on the operation of the user on the picture displayed on the display interface; and
controlling the photographing apparatus based on the time-lapse shot instruction to perform time-lapse shot on the to-be-tracked target, and adjusting a gimbal attitude of the mobile platform based on the tracking instruction, so that the to-be-tracked target is continuously displayed in the picture displayed on the display interface, so as to implement time-lapse shot and tracking on the to-be-tracked target simultaneously.

37. A photographing method, **characterized in that** the method is applied to a control terminal, wherein the method comprises:
obtaining a time-lapse shot parameter and a target tracking parameter, and determining a to-be-tracked target; and
photographing the to-be-tracked target based on the time-lapse shot parameter; and sending a control instruction to a mobile platform based on the target tracking parameter and the to-be-tracked target, to control the mobile platform to adjust a gimbal attitude of the mobile platform based on the tracking instruction, so that the to-be-tracked target is continuously displayed in a picture displayed on a display interface of the control terminal, so as to implement time-lapse shot and tracking on the to-be-tracked target simultaneously.

38. The method according to claim 37, **characterized in that** the time-lapse shot parameter includes at least one of a photographing interval duration, or a total photographing duration; and/or
the target tracking parameter includes at least one of a target tracking speed, or a target display position.

39. The method according to claim 38, **characterized in that** the obtaining of the time-lapse shot parameter and the target tracking parameter includes:
displaying a recommended photographing parameter and a recommended tracking parameter; and if a first confirmation operation of a user is obtained, determining the recommended photographing parameter and the recommended tracking parameter respectively as the time-lapse shot parameter and the target tracking parameter; or
obtaining the time-lapse shot parameter and the target tracking parameter that are independently set by the user.

40. The method according to claim 39, **characterized in that** the obtaining of the time-lapse shot parameter and the target tracking parameter that are independently set by the user includes:
displaying a parameter input interface; and obtaining a photographing parameter input by the user through the parameter input interface, to obtain the time-lapse shot parameter, and obtaining a tracking parameter input by the user through the parameter input interface, to obtain the target tracking parameter; or
displaying a plurality of candidate photographing parameters and a plurality of candidate tracking parameters; obtaining an operation of the user on making a selection from the plurality of candidate photographing parameters, and an operation of the user on making a selection from the plurality of candidate tracking parameters; and determining, based on the operation of the user on making the selection from the plurality of candidate photographing parameters and the operation on making the selection from the plurality of candidate tracking parameters, a candidate photographing parameter and a candidate tracking parameter that are selected by the user, as the time-lapse shot parameter and the target tracking parameter respectively; or
obtaining the time-lapse shot parameter and the target tracking speed that are sent by the mobile platform, wherein the time-lapse shot parameter and the target tracking speed are determined by the mobile platform based on an operation of the user to a specified key on the mobile platform.

41. The method according to claim 40, **characterized in that** the target tracking parameter includes the target tracking speed and the target display position; and
the obtaining of the tracking parameter input by the user through the parameter input interface, to obtain the target tracking parameter includes:
obtaining a tracking speed input by the user in a tracking speed area on the parameter input interface, to obtain the target tracking speed, and obtaining an operation of the user on a position setting icon on the parameter input interface, to generate a position setting instruction, wherein the position setting instruction carries display position information; and
determining a display position indicated by the display position information as the target display position.

42. The method according to claim 38, **characterized in that** the determining of the to-be-tracked target includes:
displaying a selection box in the picture displayed on the display interface; and
obtaining a second confirmation operation of the user on the selection box, and determining the to-be-tracked target based on the second confirmation operation.

43. The method according to claim 42, **characterized in that** the obtaining of the second confirmation operation of the user on the selection box, and the determining of the to-be-tracked target based on the second confirmation operation include:
if there is one selection box, obtaining an operation of the user on moving the selection box, to generate a target selection box, and determining the to-be-tracked target based on the target selection box; or
if there are a plurality of selection boxes, obtaining an operation of the user on selecting from the plurality of selection boxes, to determine a target selection box, and determining the to-be-tracked target based on the target selection box.

44. The method according to claim 42, **characterized in that** the displaying of the selection box in the picture displayed on the display interface includes:
displaying the selection box for each mobile object in the picture.

45. The method according to claim 44, **characterized in that** the obtaining of the second confirmation operation of the user on the selection box, and determining the to-be-tracked target based on the second confirmation operation includes:
obtaining an operation of the user on switching the selection box to determine a target selection box; and
determining the to-be-tracked target based on the target selection box.

46. The method according to claim 42 or 44, **characterized in that** the determining of the to-be-tracked target based on the target selection box includes:
determining a mobile object corresponding to the target selection box in the picture as the to-be-tracked target.

47. A photographing method, **characterized in that** the method is applied to a mobile platform, the method comprises:
while a control terminal photographs a to-be-tracked target based on a time-lapse shot parameter, obtaining a control instruction sent by the control terminal, wherein the control instruction is sent by the control terminal based on a target tracking parameter and the to-be-tracked target; and
adjusting a gimbal attitude of the mobile platform based on the control instruction, so that the to-be-tracked target is continuously displayed in a picture displayed on a display interface of the control terminal, so as to implement time-lapse shot and tracking on the to-be-tracked target simultaneously.

48. The method according to claim 47, **characterized in that** the control instruction includes a target angular speed; and
the adjusting of the gimbal attitude of the mobile platform based on the control instruction includes:
adjusting the gimbal attitude of the mobile platform based on the target angular speed to adjust a posture of a photographing apparatus.

49. The method according to claim 47, **characterized in that** the control instruction includes the target tracking parameter and a result of determining the to-be-tracked target, and the result of determining the to-be-tracked target is used for indicating the to-be-tracked target; and
the adjusting of the gimbal attitude of the mobile platform based on the control instruction includes:
at each interval of a preset interval duration, calculating a position change of the to-be-tracked target in the preset interval duration;
determining a target angular speed based on the position change and the target tracking parameter; and
adjusting the gimbal attitude of the mobile platform based on the target angular speed to adjust a posture of a photographing apparatus.

50. A photographing method, **characterized in that** the method is applied to a system including a mobile platform and a control terminal, the control terminal is communicated with the mobile platform, and the method comprises:
obtaining, by the control terminal, a time-lapse shot parameter and a target tracking parameter, and determining a to-be-tracked target;
photographing, by the control terminal, the to-be-tracked target based on the time-lapse shot parameter, and sending a control instruction to the mobile platform based on the target tracking parameter and the to-be-tracked target;
obtaining, by the mobile platform, the control instruction sent by the control terminal; and
while the control terminal photographs the to-be-tracked target based on the time-lapse shot parameter, adjusting, by the mobile platform, a gimbal attitude of the mobile platform based on the control instruction, so that the to-be-tracked target is continuously displayed in a picture displayed on a display interface of the control terminal, so as to implement time-lapse shot and tracking on the to-be-tracked target simultaneously.

51. A photographing device, **characterized in that** the device is applied to a control terminal, the control terminal is communicated with a mobile platform, a time-lapse shot and tracking icon is provided on a display interface of the control terminal, and the device comprises:
a display device, configured to display the time-lapse shot and tracking icon, wherein the time-lapse shot and tracking icon is used to indicate a time-lapse shot instruction and a tracking instruction, the time-lapse shot instruction is used to control the control terminal to perform time-lapse shot, and the tracking instruction is used to control the mobile platform to track a to-be-tracked target;
a first obtaining device, configured to obtain an operation of a user to the time-lapse shot and tracking icon, to generate the time-lapse shot instruction and the tracking instruction;
a second obtaining device, configured to obtain an operation of the user on a picture displayed on the display interface, and determine the to-be-tracked target based on the operation of the user on the picture displayed on the display interface, wherein the picture includes a picture obtained by the control terminal; and
a control device, configured to control the mobile platform to adjust a gimbal attitude of the mobile platform based on the tracking instruction to track the to-be-tracked target, so that the to-be-tracked target is continuously displayed on the display interface, and perform time-lapse shot on the to-be-tracked target based on the time-lapse shot instruction, to implement time-lapse shot and tracking on the to-be-tracked target simultaneously.

52. The device according to claim 51, **characterized in that** the first obtaining device includes:
an obtaining sub-device, configured to obtain an operation of the user on setting a time-lapse shot parameter and a target tracking parameter.

53. The device according to claim 52, **characterized in that** the obtaining sub-device includes:
an obtaining unit, configured to: if a preset operation of the user on the time-lapse shot and tracking icon is obtained, obtain the operation of the user on setting the time-lapse shot parameter and the target tracking parameter.

54. The device according to claim 52, **characterized in that** the time-lapse shot parameter includes at least one of a photographing interval duration, or a total photographing duration; and/or
the target tracking parameter includes at least one of a target tracking speed, or a target display position.

55. The device according to claim 52, **characterized in that** the obtaining unit is specifically configured to:
display a recommended photographing parameter and a recommended tracking parameter; and if a first confirmation operation of the user is obtained, determine the recommended photographing parameter and the recommended tracking parameter respectively as the time-lapse shot parameter and the target tracking parameter; or
obtain the time-lapse shot parameter and the target tracking parameter that are independently set by the user.

56. The device according to claim 55, **characterized in that** the obtaining unit is further specifically configured to:
display a parameter input interface; and obtain a photographing parameter input by the user through the parameter input interface, to obtain the time-lapse shot parameter, and obtain a tracking parameter input by the user through the parameter input interface, to obtain the target tracking parameter; or
display a plurality of candidate photographing parameters and a plurality of candidate tracking parameters; obtain an operation of the user on making a selection from the plurality of candidate photographing parameters, and an operation of the user on making a selection from the plurality of candidate tracking parameters; and determine, based on the operation of the user on making the selection from the plurality of candidate photographing parameters and the operation on making the selection from the plurality of candidate tracking parameters, a candidate photographing parameter and a candidate tracking parameter that are selected by the user, as the time-lapse shot parameter and the target tracking parameter respectively; or
obtain the time-lapse shot parameter and the target tracking speed that are sent by the mobile platform, wherein the time-lapse shot parameter and the target tracking speed are determined by the mobile platform based on an operation of the user on a specified key on the mobile platform.

57. The device according to claim 56, **characterized in that** the target tracking parameter includes the target tracking speed and a target display position; and
the obtaining unit is further specifically configured to:
obtain a tracking speed input by the user in a tracking speed area on the parameter input interface, to obtain the target tracking speed, and obtain an operation of the user on a position setting icon on the parameter input interface, to generate a position setting instruction, wherein the position setting instruction carries display position information; and
determine a display position indicated by the display position information as the target display position.

58. The device according to claim 54, **characterized in that** the time-lapse shot instruction includes the time-lapse shot parameter; and
the control device includes:
a photographing sub-device, configured to photograph the to-be-tracked target at each interval of a photographing interval duration, until a photographing duration reaches the total photographing duration; or
a first sending sub-device, configured to send the time-lapse shot parameter to the mobile platform, so that the mobile platform performs the operation of photographing the to-be-tracked target at each interval of a photographing interval duration, until a photographing duration reaches the total photographing duration.

59. The device according to claim 52, **characterized in that** the tracking instruction includes a control parameter determined based on the target tracking parameter and the to-be-tracked target; and
the control device comprises:
a second sending sub-device, configured to send the tracking instruction carrying the control parameter to the mobile platform, to control the mobile platform to adjust the gimbal attitude of the mobile platform based on the tracking instruction.

60. The device according to claim 59, **characterized in that**
the second sending sub-device is specifically configured to:
at each interval of a preset interval duration, calculate a position change of the to-be-tracked target in the preset interval duration; and determine a target angular speed based on the position change and the target tracking parameter; and
use the target angular speed as the control parameter, and send the tracking instruction carrying the target angular speed to the mobile platform.

61. The device according to claim 59, **characterized in that** the second sending sub-device is specifically configured to:
use the target tracking parameter and a result of determining the to-be-tracked target as the control parameter, and send the tracking instruction carrying the target tracking parameter and the result of determining the to-be-tracked target to the mobile platform, wherein the result of determining the to-be-tracked target is used to indicate the to-be-tracked target.

62. The device according to claim 51, **characterized in that** the device further comprises:
a first stopping apparatus, configured to: if an ending instruction is obtained, stop the operation of performing time-lapse shot based on the time-lapse shot instruction, and stop the operation of controlling the mobile platform to adjust the gimbal attitude of the mobile platform based on the tracking instruction and the to-be-tracked target to track the to-be-tracked target.

63. The device according to claim 62, **characterized in that** the device further comprises:
a third obtaining apparatus, configured to: if an ending key is provided on the display interface of the control terminal, obtain an operation of the user on the ending key, to obtain the ending instruction; or
a fourth obtaining apparatus, configured to: if an ending key is provided on the mobile platform, obtain an operation of the user on the ending key on the mobile platform, to obtain the ending instruction.

64. The device according to claim 54, **characterized in that** the device further comprises:
a second stopping apparatus, configured to: if a photographing duration of the time-lapse shot reaches the total photographing duration, stop the operation of performing time-lapse shot based on the time-lapse shot instruction, and stop the operation of controlling the mobile platform to adjust a gimbal attitude of the mobile platform based on the tracking instruction and the to-be-tracked target to track the to-be-tracked target.

65. The device according to claim 51, **characterized in that** the second obtaining device is specifically configured to:
display a selection box in the picture displayed on the display interface; and
obtain a second confirmation operation of the user on the selection box, and determine the to-be-tracked target based on the second confirmation operation.

66. The device according to claim 65, **characterized in that** the selection box includes a dot, a line, or a polygonal box.

67. The device according to claim 65, **characterized in that** the second obtaining device is further specifically configured to:
if there is one selection box, obtain an operation of the user on moving the selection box, to generate a target selection box, and determine the to-be-tracked target based on the target selection box; or
if there are a plurality of selection boxes, obtain an operation of the user on selecting from the plurality of selection boxes, to determine a target selection box, and determine the to-be-tracked target based on the target selection box.

68. The device according to claim 65, **characterized in that** the second obtaining device is further specifically configured to:
display the selection box for each mobile object in the picture.

69. The device according to claim 68, **characterized in that** the second obtaining device is further specifically configured to:
obtain an operation of the user on switching the selection box to determine a target selection box; and
determine the to-be-tracked target based on the target selection box.

70. The device according to claim 67 or 69, **characterized in that** the second obtaining device is further specifically configured to:
determine a mobile object corresponding to the target selection box in the picture as the to-be-tracked target.

71. The device according to claim 67, **characterized in that** the device further comprises:
a first confirmation apparatus, configured to obtain a third confirmation operation of the user on the target selection box displayed on the display interface of the control terminal, to confirm the target selection box; or
a second confirmation apparatus, configured to obtain a third confirmation operation of the user on a selection key on the mobile platform, to confirm the target selection box.

72. The device according to claim 71, **characterized in that** the third confirmation operation includes: touching and holding, tapping, or double-tapping.

73. The device according to claim 51, **characterized in that** the control terminal includes a photographing apparatus, and the control device is further specifically configured to control the photographing apparatus based on the time-lapse shot instruction to perform the time-lapse shot on the to-be-tracked target.

74. The device according to claim 51, **characterized in that** the control terminal is communicated with a photographing apparatus, and the control device is further specifically configured to:
send the time-lapse shot instruction to the photographing apparatus, to control the photographing apparatus to perform the time-lapse shot on the to-be-tracked target based on the time-lapse shot instruction.

75. A photographing device, **characterized in that** the device is applied to a mobile platform, the mobile platform is communicated with a control terminal, and the device comprises:
a first obtaining device, configured to obtain a tracking instruction sent by the control terminal; and
an adjustment device, configured to: while the control terminal performs time-lapse shot on a to-be-tracked target based on a time-lapse shot instruction, adjust a gimbal attitude of the mobile platform based on the tracking instruction, so that the to-be-tracked target is continuously displayed in a picture displayed on a display interface of the control terminal.

76. The device according to claim 75, **characterized in that** the tracking instruction carries a target angular speed; and
the adjustment device is specifically configured to:
adjust the gimbal attitude of the mobile platform based on the target angular speed to adjust a posture of a photographing apparatus.

77. The device according to claim 75, **characterized in that** the tracking instruction carries a target tracking parameter and a result of determining the to-be-tracked target, and the result of determining the to-be-tracked target is used to indicate the to-be-tracked target; and
the adjustment device is further specifically configured to:
at each intervals of a preset interval duration, calculate a position change of the to-be-tracked target in the preset interval duration;
determine a target angular speed based on the position change and the target tracking parameter; and
adjust the gimbal attitude of the mobile platform based on the target angular speed to adjust a posture of a photographing apparatus.

78. The device according to any one of claims 75 to 77, **characterized in that** the control terminal includes the photographing apparatus, or the control terminal is communicated with the photographing apparatus.

79. The device according to claim 75, **characterized in that** a selection key is provided on the mobile platform, the selection key is used to confirm the to-be-tracked target, and the device further comprises:
a second obtaining device, configured to obtain an operation of a user to the selection key; and
a confirmation apparatus, configured to confirm the to-be-tracked target based on the operation of the user on the selection key.

80. The device according to claim 79, **characterized in that** after the confirmation apparatus confirms the to-be-tracked target, the adjustment device controls the mobile platform to adjust the gimbal attitude of the mobile platform based on the tracking instruction, so that the to-be-tracked target is continuously displayed in a picture captured by a photographing apparatus.

81. A photographing system, **characterized by** comprising a mobile platform and a control terminal, wherein the control terminal is communicated with the mobile platform, and a time-lapse shot and tracking icon is provided on a display interface of the control terminal;
the control terminal is configured to display the time-lapse shot and tracking icon;
the control terminal is configured to obtain an operation of a user to the time-lapse shot and tracking icon, to generate the time-lapse shot instruction and the tracking instruction;
the control terminal is configured to obtain an operation of the user on a picture displayed on the display interface, and determine the to-be-tracked target based on the operation of the user on the picture displayed on the display interface, wherein the picture comprises a picture obtained by the control terminal;
the control terminal is configured to control the mobile platform to adjust a gimbal attitude of the mobile platform based on the tracking instruction, and perform time-lapse shot on the to-be-tracked target based on the time-lapse shot instruction;
the mobile platform is configured to obtain the tracking instruction sent by the control terminal; and
the mobile platform is configured to: while the control terminal performs time-lapse shot on the to-be-tracked target based on the time-lapse shot instruction, adjust the gimbal attitude of the mobile platform based on the tracking instruction, so that the to-be-tracked target is continuously displayed in the picture displayed on the display interface of the control terminal.

82. A photographing device, **characterized in that** the device is applied to a mobile platform, wherein the mobile platform is communicated with a control terminal and configured to mount the control terminal, a time-lapse tracking and photographing key is provided in the mobile platform, and the device comprises:
a first obtaining device, configured to obtain an operation of a user to the time-lapse tracking and photographing key, to generate a time-lapse tracking and photographing trigger instruction;
a sending apparatus, configured to send the time-lapse tracking and photographing trigger instruction to the control terminal, so that the control terminal generates a time-lapse shot instruction and a tracking instruction;
a second obtaining device, configured to obtain the tracking instruction sent by the control terminal; and
an adjustment device, configured to: while the control terminal performs time-lapse shot on a to-be-tracked target based on the time-lapse shot instruction, adjust a gimbal attitude of the mobile platform based on the tracking instruction, so that the to-be-tracked target is continuously displayed in a picture displayed on a display interface of the control terminal.

83. A photographing device, **characterized in that** the device is applied to a control terminal, **characterized in that** the control terminal is communicated with a mobile platform, the control terminal is further mounted on the mobile platform, and the device comprises:
a first obtaining device, configured to obtain a time-lapse tracking and photographing trigger instruction sent by the mobile platform;
a generating apparatus, configured to generate a time-lapse shot instruction and a tracking instruction;
a second obtaining device, configured to obtain an operation of a user on a picture displayed on a display interface, and determine the to-be-tracked target based on the operation of the user on the picture displayed on the display interface, wherein the picture includes a picture obtained by the control terminal; and
a control device, configured to perform time-lapse shot on the to-be-tracked target based on the time-lapse shot instruction, and control the mobile platform to adjust a gimbal attitude of the mobile platform based on the tracking instruction to track the to-be-tracked target, so that the to-be-tracked target is continuously displayed on the display interface, so as to implement time-lapse shot and tracking on the to-be-tracked target simultaneously.

84. The device according to claim 83, **characterized in that** the time-lapse shot instruction is a time-lapse shot parameter; and the tracking instruction is a control parameter determined based on a target tracking parameter and the to-be-tracked target; and
correspondingly, the generating apparatus is specifically configured to:
obtain an operation of the user on setting the time-lapse shot parameter and the target tracking parameter, to determine the time-lapse shot parameter and the target tracking parameter; and
determine the control parameter based on the target tracking parameter and the to-be-tracked target.

85. A photographing system, **characterized by** comprising a mobile platform and a control terminal, the mobile platform is communicated with the control terminal and configured to mount the control terminal, and a time-lapse tracking and photographing key is provided in the mobile platform;
the mobile platform is configured to obtain an operation of a user to the time-lapse tracking and photographing key, to generate a time-lapse tracking and photographing trigger instruction;
the mobile platform is configured to send the time-lapse shot trigger instruction to the control terminal;
the control terminal is configured to obtain the time-lapse shot trigger instruction sent by the mobile platform;
the control terminal is configured to generate a time-lapse shot instruction and a tracking instruction, wherein the time-lapse shot instruction is used to control the control terminal to perform time-lapse shot, and the tracking instruction is used to control the mobile platform to track a to-be-tracked target;
the control terminal is configured to obtain an operation of the user on a picture displayed on a display interface, and determine the to-be-tracked target based on the operation of the user on the picture displayed on the display interface, wherein the picture includes a picture obtained by the control terminal;
the control terminal is configured to perform time-lapse shot on the to-be-tracked target based on the time-lapse shot instruction, and control the mobile platform to adjust a gimbal attitude of the mobile platform based on the tracking instruction;
the mobile platform is configured to obtain the tracking instruction sent by the control terminal; and
the mobile platform is configured to: while the control terminal performs time-lapse shot on the to-be-tracked target based on the time-lapse shot instruction, adjust the gimbal attitude of the mobile platform based on the tracking instruction, so that the to-be-tracked target is continuously displayed in the picture displayed on the display interface of the control terminal.

86. A photographing device, **characterized in that** the device is applied to a mobile platform, the mobile platform is provided with a display interface and further provided with a photographing apparatus, the mobile platform is communicated with the photographing apparatus, and the device comprises:
a first obtaining device, configured to obtain an operation of a user to a time-lapse shot and tracking icon on the display interface, to generate a time-lapse shot instruction and a tracking instruction, wherein the time-lapse shot instruction is used to control the photographing apparatus to perform time-lapse shot, and the tracking instruction is used to control the mobile platform to track a to-be-tracked target for photographing;
a second obtaining device, configured to obtain the operation of the user on a picture displayed on the display interface, and determine the to-be-tracked target based on the operation of the user on the picture displayed on the display interface; and
an adjustment device, configured to control the photographing apparatus based on the time-lapse shot instruction to perform time-lapse shot on the to-be-tracked target, and adjust a gimbal attitude of the mobile platform based on the tracking instruction, so that the to-be-tracked target is continuously displayed in the picture displayed on the display interface, to implement time-lapse shot and tracking on the to-be-tracked target simultaneously.

87. A photographing device, **characterized in that** the device is applied to a control terminal, the device comprises:
an obtaining apparatus, configured to obtain a time-lapse shot parameter and a target tracking parameter, and determine a to-be-tracked target; and
a tracking and photographing apparatus, configured to photograph the to-be-tracked target based on the time-lapse shot parameter; and send a control instruction to a mobile platform based on the target tracking parameter and the to-be-tracked target, to control the mobile platform to adjust a gimbal attitude of the mobile platform based on the tracking instruction, so that the to-be-tracked target is continuously displayed in a picture displayed on a display interface of the control terminal, so as to implement time-lapse shot and tracking on the to-be-tracked target simultaneously.

88. The device according to claim 87, **characterized in that** the time-lapse shot parameter includes at least one of a photographing interval duration, or a total photographing duration; and/or
the target tracking parameter includes at least one of a target tracking speed, or a target display position.

89. The device according to claim 88, **characterized in that** the obtaining apparatus is specifically configured to:
display a recommended photographing parameter and a recommended tracking parameter; and if a first confirmation operation of a user is obtained, determine the recommended photographing parameter and the recommended tracking parameter respectively as the time-lapse shot parameter and the target tracking parameter; or
obtain the time-lapse shot parameter and the target tracking parameter that are independently set by the user.

90. The device according to claim 89, **characterized in that** the obtaining apparatus is further specifically configured to:
display a parameter input interface; and obtain a photographing parameter input by the user through the parameter input interface, to obtain the time-lapse shot parameter, and obtain a tracking parameter input by the user through the parameter input interface, to obtain the target tracking parameter; or
display a plurality of candidate photographing parameters and a plurality of candidate tracking parameters; obtain an operation of the user on making a selection from the plurality of candidate photographing parameters, and an operation of the user on making a selection from the plurality of candidate tracking parameters; and determine, based on the operation of the user on making the selection from the plurality of candidate photographing parameters and the operation on making the selection from the plurality of candidate tracking parameters, a candidate photographing parameter and a candidate tracking parameter that are selected by the user, as the time-lapse shot parameter and the target tracking parameter respectively; or
obtain the time-lapse shot parameter and the target tracking speed that are sent by the mobile platform, wherein the time-lapse shot parameter and the target tracking speed are determined by the mobile platform based on an operation of the user on a specified key on the mobile platform.

91. The device according to claim 90, **characterized in that** the target tracking parameter includes the target tracking speed and the target display position; and
the obtaining apparatus is further specifically configured to:
obtain a tracking speed input by the user in a tracking speed area on the parameter input interface, to obtain the target tracking speed, and obtain an operation of the user on a position setting icon on the parameter input interface, to generate a position setting instruction, wherein the position setting instruction carries display position information; and
determine a display position indicated by the display position information as the target display position.

92. The device according to claim 88, **characterized in that** the obtaining apparatus is further specifically configured to:
display a selection box in the picture displayed on the display interface; and
obtain a second confirmation operation of the user on the selection box, and determine the to-be-tracked target based on the second confirmation operation.

93. The device according to claim 92, **characterized in that** the obtaining apparatus is further specifically configured to:
if there is one selection box, obtain an operation of the user on moving the selection box, to generate a target selection box, and determine the to-be-tracked target based on the target selection box; or
if there are a plurality of selection boxes, obtain an operation of the user on selecting from the plurality of selection boxes, to determine a target selection box, and determine the to-be-tracked target based on the target selection box.

94. The device according to claim 92, **characterized in that** the obtaining apparatus is further specifically configured to:
display the selection box for each mobile object in the picture.

95. The device according to claim 94, **characterized in that** the obtaining apparatus is further specifically configured to:
obtain an operation of the user on switching the selection box to determine a target selection box; and
determine the to-be-tracked target based on the target selection box.

96. The device according to claim 92 or 94, **characterized in that** the obtaining apparatus is further specifically configured to:
determine a mobile object corresponding to the target selection box in the picture as the to-be-tracked target.

97. A photographing device, **characterized in that** the device is applied to a mobile platform, the device comprises:
an obtaining apparatus, configured to: while a control terminal photographs a to-be-tracked target based on a time-lapse shot parameter, obtain a control instruction sent by the control terminal, wherein the control instruction is sent by the control terminal based on a target tracking parameter and the to-be-tracked target; and
an adjustment device, configured to adjust a gimbal attitude of the mobile platform based on the control instruction, so that the to-be-tracked target is continuously displayed in a picture displayed on a display interface of the control terminal, so as to implement time-lapse shot and tracking on the to-be-tracked target simultaneously.

98. The device according to claim 97, **characterized in that** the control instruction includes a target angular speed; and
the adjustment device is specifically configured to:
adjust the gimbal attitude of the mobile platform based on the target angular speed to adjust a posture of a photographing apparatus.

99. The device according to claim 97, **characterized in that** the control instruction includes the target tracking parameter and a result of determining the to-be-tracked target, and the result of determining the to-be-tracked target is used to indicate the to-be-tracked target; and
the adjustment device is specifically configured to:
at each interval of a preset interval duration, calculate a position change of the to-be-tracked target in the preset interval duration;
determine a target angular speed based on the position change and the target tracking parameter; and
adjust the gimbal attitude of the mobile platform based on the target angular speed to adjust a posture of a photographing apparatus.

100. A photographing system, **characterized by** comprising a mobile platform and a control terminal, the control terminal is communicated with the mobile platform;
the control terminal is configured to obtain a time-lapse shot parameter and a target tracking parameter, and determine a to-be-tracked target;
the control terminal is configured to photograph the to-be-tracked target based on the time-lapse shot parameter, and send a control instruction to the mobile platform based on the target tracking parameter and the to-be-tracked target;
the mobile platform is configured to obtain the control instruction sent by the control terminal; and
the mobile platform is configured to: while the control terminal photographs the to-be-tracked target based on the time-lapse shot parameter, adjust a gimbal attitude of the mobile platform based on the control instruction, so that the to-be-tracked target is continuously displayed in a picture displayed on a display interface of the control terminal, so as to implement time-lapse shot and tracking on the to-be-tracked target simultaneously.

101. A computer-readable storage medium, **characterized in that** the computer-readable storage medium stores a computer program, and when the computer program is executed by a processor, steps of the photographing method according to any one of claims 1 to 100 are implemented.
